# EUROPEAN PATENT APPLICATION

(11) **EP 4 740 785 A1**
(43) Date of publication of application: **13.05.2026**
(21) Application number: 23947732.6
(22) Date of filing: 04.12.2023
(51) Int. Cl.: A45D 20/12, G06F 3/041, G06F 3/0484

(54) **HAIR DRYER AND CONTROL METHOD FOR SAME**

(30) Priority: 31.07.2023 KR 20230099836; 30.11.2023 KR 20230170650
(71) Applicant: LG Electronics Inc., Yeongdeungpo-gu Seoul 07336 (KR)
(72) Inventor: KIM, Jaeuk, Seoul 06772 (KR); CHOI, Kwangsoo, Seoul 06772 (KR); LEE, Seojin, Seoul 06772 (KR); CHOI, Gain, Seoul 06772 (KR)
(74) Representative: Schott, Jakob Valentin
(86) International application number: PCT/KR2023/019749
(87) International publication number: WO 2025/028730

(57) **Abstract**

The present disclosure relates to a hair dryer to which a display is attached. In particular, by defining various UX/UI scenarios, not only is user convenience increased, but a rapid increase in temperature due to the hair dryer being overloaded is prevented.

## Description

### TECHNICAL FIELD

The present disclosure relates to a technology related to a hair dryer, and more particularly, may be applied to all types of hair dryers having a display on one side.

### BACKGROUND

The main purpose of a hair dryer is to dry wet hair, but recently it has also been used for hair styling.

However, according to the related art, hair dryers only have physical buttons, making it difficult to provide various options or control functions.

To resolve this, it is considered that a display is attached to a hair dryer, but a problem arises in that hair dryers consume a lot of power due to high heat and motor usage.

### DISCLOSURE

### Technical Problem

An object of one of embodiments of the present disclosure is to provide a hair dryer with various functions related to hair styling and artificial intelligence (AI).

An object of one of embodiments of the present disclosure is to minimize power consumption of a hair dryer through efficient user experience (UX) layout and the like while a display module is attached to the hair dryer.

### Technical Solution

According to one of embodiments of the present disclosure, a method of controlling a hair dryer includes outputting wind through a discharge port located in a first surface of the hair dryer, displaying an icon for controlling a temperature of the wind in a first area through a display located on a second surface of the hair dryer, displaying an icon for controlling an intensity of the wind in a second area through the display located on the second surface of the hair dryer, and performing control not to output wind through the discharge port in response to an input received through a first button located on a third surface.

The first area and the second area may be symmetrical to each other and may each be located in an edge region of the display.

A first temperature change of the wind according to a touch recognized in the first area and a second temperature change of the wind according to an input received through a second button located on a fourth surface may be different from each other.

The second temperature change may be greater than the first temperature change.

first intensity change of the wind according to a touch recognized in the first area and a second intensity change of the wind according to an input received through a third button located on the fourth surface may be different from each other.

The second intensity change may be greater than the first second intensity change.

The method may further include storing the first temperature change, the second temperature change, the first intensity change, and the second intensity change in a memory.

According to an embodiment of the present disclosure, a hair dryer includes a discharge port located in a first surface of the hair dryer and outputting wind, a display located on a second surface of the hair dryer and configured to display an icon for controlling a temperature of the wind in a first area and display an icon for controlling an intensity of the wind in a second area, and a controller configured to perform control not to output wind through the discharge port in response to an input received through a first button located on a third surface.

For example, an angle between an external direction of the second surface and an external direction of the fourth surface may be greater than an angle between an external direction of the first surface and an external direction of the third surface.

It is also within the scope of the present disclosure for a third party to implement a computer-readable medium (e.g., an application, memory, and software) recording a program for performing any of the methods described above and various embodiments described in the present specification.

### Advantageous Effects

One of embodiments of the present disclosure may provide a hair dryer with various functions related to hair styling and artificial intelligence (AI).

One of embodiments of the present disclosure may minimize power consumption of a hair dryer through efficient user experience (UX) layout and the like while a display module is attached to the hair dryer.

In addition to the technical effects described above, it is obvious that effects to be inferred by a person skilled in the art through the entire specification needs to be considered.

### BRIEF DESCRIPTION OF THE DRAWINGS

FIG. 1 is a diagram showing an outer appearance of a hair dryer according to one of embodiments of the present disclosure.
FIG. 2 illustrates a basic menu output through a display 120 illustrated in FIG. 1.
FIG. 3 defines My Mode according to one of embodiments of the present disclosure.
FIG. 4 is a diagram for explaining an operation of setting the temperature and intensity in My Mode shown in FIG. 3.
FIG. 5 defines a recommended mode according to one of embodiments of the present disclosure.
FIG. 6 illustrates a process of selecting a mode when using a hair dryer for the first time, according to one of embodiments of the present disclosure.
FIG. 7 illustrates a process of selecting a mode after using a hair dryer for the first time, according to one of embodiments of the present disclosure.
FIG. 8 illustrates a process of selecting a mode when turning the power of a hair dryer off and then on again according to one of embodiments of the present disclosure.
FIG. 9 illustrates a process of selecting a setting option according to one of embodiments of the present disclosure.
FIG. 10 illustrates a process of changing a mode according to one of embodiments of the present disclosure.
FIG. 11 illustrates a process of turning on/off an AI option of a recommended mode according to one of embodiments of the present disclosure.
FIG. 12 illustrates a process of turning on/off an AI option of a recommended mode by using a mobile phone.
FIGS. 13 to 15 illustrate a process of turning on/off an AI option of a recommended mode according to the power and network connection state of a hair dryer, according to one of embodiments of the present disclosure.
FIG. 16 illustrates a process of controlling a hair dryer with a physical button and outputting a result value to a display in a recommended mode according to one of embodiments of the present disclosure.
FIG. 17 illustrates a process of controlling a hair dryer with a physical button and outputting a result value to a display in My Mode according to one of embodiments of the present disclosure.
FIG. 18 illustrates a process of outputting a result value to a display when a specific physical button is long pressed according to one of embodiments of the present disclosure.
FIG. 19 illustrates a basic process of changing settings of a hair dryer according to one of embodiments of the present disclosure.
FIG. 20 illustrates a process of locking a display screen of a hair dryer according to one of embodiments of the present disclosure.
FIG. 21 illustrates a process of adjusting display brightness of a hair dryer according to one of embodiments of the present disclosure.
FIG. 22 illustrates a process of linking an application downloaded to an external device connected to a hair dryer via a network
   a hair dryer according to one of embodiments of the present disclosure.
FIG. 23 illustrates a process of checking device information of a hair dryer according to one of embodiments of the present disclosure.
FIG. 24 illustrates an image displayed on a display when a physical button is selected in a specific state of a hair dryer according to one of embodiments of the present disclosure.
FIG. 25 illustrates a menu for user change of a hair dryer according to one of embodiments of the present disclosure.
FIG. 26 illustrates a process for user change of a hair dryer according to one of embodiments of the present disclosure.
FIGS. 27 and 28 illustrate a process of changing a user of a hair dryer by using an external device.
FIG. 29 illustrates a process of outputting a filter cleaning notification of a hair dryer to a display according to one of embodiments of the present disclosure.
FIG. 30 illustrates a process of outputting an error notification display of a hair dryer according to one of embodiments of the present disclosure.
FIGS. 31 to 34 illustrate a firmware update process of a hair dryer according to one of embodiments of the present disclosure.
FIG. 35 is a block diagram showing the configuration of a hair dryer according to one of embodiments of the present disclosure.
FIG. 36 is a flowchart illustrating a method of controlling a hair dryer according to an embodiment of the present disclosure.
FIG. 37 is a flowchart illustrating a method of controlling a hair dryer according to another embodiment of the present disclosure.

### BEST MODE FOR CARRYING OUT THE DISCLOSURE

Hereinafter, the present disclosure will be described in detail by explaining embodiments of the present disclosure with reference to the attached drawings. The same reference numerals in the drawings denote like elements, and a repeated explanation thereof will not be given. The suffixes "module" and "unit" of elements herein are used for convenience of description and thus can be used interchangeably and do not have any distinguishable meanings or functions.

In the following description of the at least one embodiment, a detailed description of known functions and configurations incorporated herein will be omitted for the purpose of clarity and for brevity. The features of the present disclosure will be more clearly understood from the accompanying drawings and should not be limited by the accompanying drawings, and it is to be appreciated that all changes, equivalents, and substitutes that do not depart from the spirit and technical scope of the present disclosure are encompassed in the present disclosure.

It will be understood that, although the terms first, second, third etc. may be used herein to describe various elements, these elements should not be limited by these terms. These terms are only used to distinguish one element from another element. It will be understood that when an element is referred to as being "on", "connected to" or "coupled to" another element, it may be directly on, connected or coupled to the other element or intervening elements may be present.

In contrast, when an element is referred to as being "directly on," "directly connected to" or "directly coupled to" another element or layer, there are no intervening elements present.

Singular forms also include plural forms unless specifically stated otherwise in a phrase.

It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

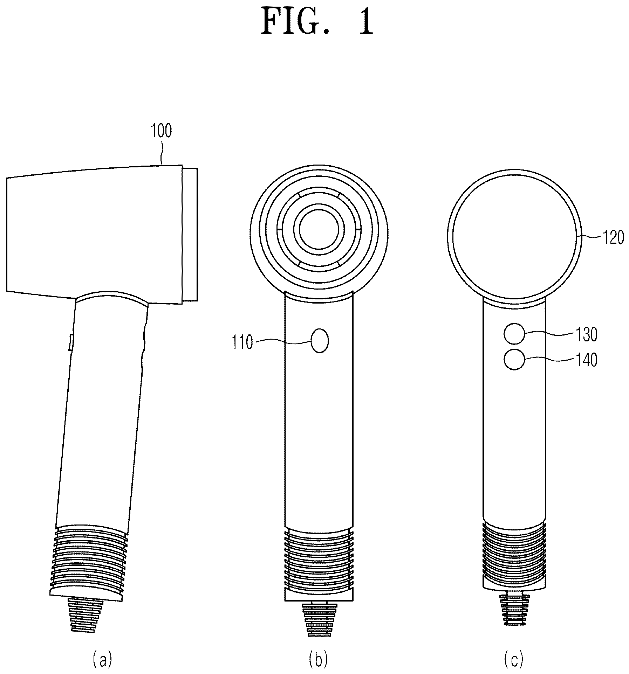

FIG. 1 is a diagram showing an outer appearance of a hair dryer according to one of embodiments of the present disclosure.

The hair dryer according to an embodiment of the present disclosure has a main body 100 as shown in (a) of FIG. 1. The wind is output through a discharge port located in a first surface.

(b) of FIG. 1 is a diagram of the hair dryer shown in (a) of FIG. 1 viewed from the front, and (c) of FIG. 1 is a diagram of the hair dryer shown in (a) of FIG. 1 viewed from the rear.

As shown in (c) of FIG. 1, a current operation mode of the hair dryer and the like may be displayed through a display 120 located on a second surface of the hair dryer.

As shown in (b) of FIG. 1, in response to selection of a first button 110 located on a third surface of the hair dryer, the wind is controlled to be output or not output through the discharge port of the main body 100.

As shown in (c) of FIG. 1, the operation mode displayed on the display 120 is changed in response to selection of a second button 130 or a third button 140 located on a fourth surface of the hair dryer.

As illustrated in FIG. 1, an angle between an external direction of the second surface on which the display 120 is located and an external direction of the fourth surface on which the second button 130 and the third button 140 are located may be designed to be greater than an angle between an external direction of the first surface in which the discharge port is located and an external direction of the third surface on which the first button 110 is located, and thus a user may quickly and simultaneously operate the physical buttons 110, 130, and 140, touch the display 120, and confirm the operation.

The display 120 illustrated in FIG. 1 may be implemented as a circular liquid crystal display (LCD) of about 53 mm, for example, and may additionally be equipped with a touch function.

The first button 110 illustrated in FIG. 1 may be implemented, for example, in the form of a slide key.

On the other hand, the second button 130 and the third button 140 shown in FIG. 1 may be implemented in the form of a push button.

When the second button 130 is selected, a temperature level of the wind output by the hair dryer may be adjusted, and when pressed for a preset time (e.g., 1.5 seconds) or longer (Long Press), the hair dryer is switched to cold air.

When the third button 140 is selected, a level of wind intensity output by the hair dryer may be adjusted. However, unlike the second button 130, the hair dryer may be set such that there is no additional operation for Long Press, thereby preventing a sudden, rapid flow of hot air.

One feature of the present disclosure is that a mode of the hair dryer and the display 120 may be variably controlled depending on the selection of the second button 130 or the third button 140.

For example, when the hair dryer according to an embodiment of the present disclosure operates in My Mode, when the second button 130 is selected, the temperature of the wind output by the hair dryer is adjusted in the order of level 2, level 4, level 7, cold air, level 2, level 4, and level 7. On the other hand, when the second button 130 is selected while the hair dryer operates in a recommended mode, the mode switches in the order of scalp care mode, hair care mode, and styling mode.

When the hair dryer according to an embodiment of the present disclosure operates in My Mode, when the third button 140 is selected, the wind intensity output by the hair dryer is adjusted in the order of level 3, level 5, level 6, level 3, level 5, and level 6. On the other hand, when the third button 140 is selected while the hair dryer operates in a recommended mode, the mode switches in the order of styling mode, hair care mode, and scalp care mode.

In My Mode defined by the specification, the adjustable wind temperature is divided into 8 levels, and the wind intensity is divided into 6 levels.

On the other hand, in the scalp care mode belonging to a recommended mode, the wind intensity is fixed at level 6, the wind temperature is maintained at level 1, and cold air is output alternately at 5-second intervals.

In the hair care mode belonging to the recommended mode, the wind intensity is fixed at level 5, the wind temperature is maintained at level 5, and cold air is output alternately at 3-second intervals.

The styling mode belonging to the recommended mode is designed such that the wind intensity is fixed at level 4, the wind temperature is maintained at level 7, and, unlike the scalp care mode and hair care mode described above, alternate output of cold air is not intentionally performed.

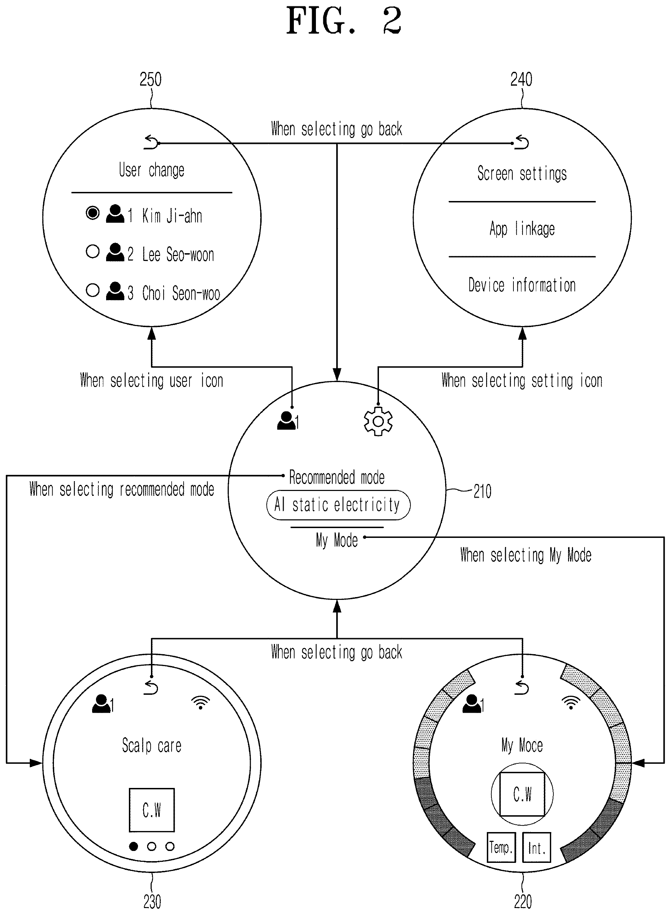

FIG. 2 illustrates a basic menu output through the display 120 illustrated in FIG. 1.

A hair dryer according to an embodiment of the present disclosure may display a main menu 210.

When a My Mode option is selected in the main menu 210, a graphic image 220 related to My Mode is displayed.

In the main menu 210, when a recommended mode option is selected, one of the recommended modes (e.g., scalp care 230) is displayed.

When a setting icon is selected in the main menu 210, a graphic image 240 related to screen settings, and the like is displayed.

In the main menu 210, when a user icon is selected, a graphic image (250) that allows a user to be changed is displayed.

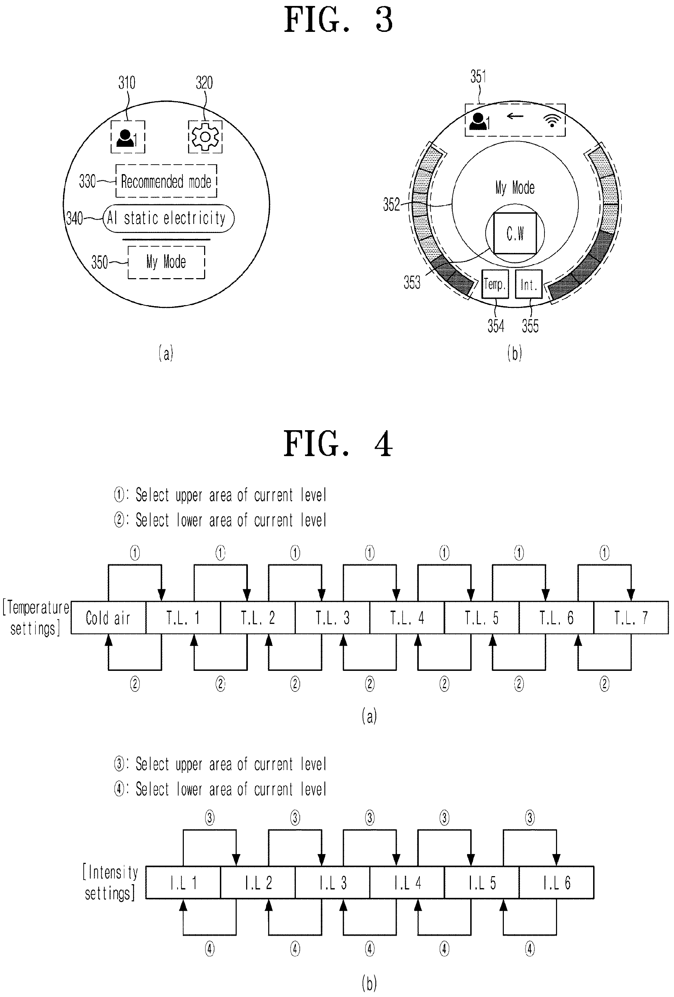

In FIG. 3, My Mode is defined according to one of embodiments of the present disclosure.

(a) of FIG. 3 shows a menu screen provided by default before selecting a My Mode option 350.

A user icon 310 displays the number of the currently selected user, and when the user icon 310 is selected, the screen switches to another screen on which the user is to be changed.

When a setting icon 320 is selected, the screen switches to another screen on which various settings of the hair dryer is to be changed.

When a recommended mode option 330 is selected, the screen switches to the scalp care mode, which is one of the recommended modes, and the hair dryer operates at the wind intensity and temperature corresponding to the scalp care mode described above.

When an artificial intelligence (AI) option 340 is selected, the hair dryer is automatically controlled to minimize static electricity by applying AI technology in consideration of the current temperature information, and the like. The AI option 340 is in the form of a toggle button, and an on/off operation is performed immediately.

When the My Mode option 350 is selected, the screen switches to the My Mode screen, and the hair dryer is controlled with the wind temperature and intensity set in My Mode. However, when there is no history of setting My Mode, the wind temperature may default to level 2 and the wind intensity may default to level 3. However, the scope of the present disclosure is not limited to the corresponding figures.

When the My Mode option 350 shown in (a) of FIG. 3 is selected, the screen switches to the screen shown in (b) of FIG. 3.

A phrase 532 indicating that My Mode is currently executed is displayed, and at an upper end 351, a back button (when selected, moves to a previous screen), the currently selected user number (e.g., 1, 2, and 3), and a Wi-Fi connection state are displayed.

When a crosswind option 353 is selected, crosswind (hot/cold air) may be turned on and off. By default, crosswind is provided in an off state.

When the crosswind option 353 is in on, cold air and wind of the currently set temperature are blown alternately at intervals of, for example, 5 seconds.

On the other hand, when crosswind option 353 is off, wind of the currently set temperature is blown.

When the crosswind option 353 is on, for example, the screen changes to a gray icon, and when the crosswind option 353 is off, for example, the screen changes to a gray icon.

However, when a key button for temperature control is long pressed, a cool shot icon is replaced instead of the crosswind option 353.

When My Mode is executed, in a left area 354, the wind temperature icon and the level (stage) of the wind temperature are displayed. For example, the left area 354 is displayed in the form of a semicircular graph and is symmetrical to a right area 355, but the number of levels is different.

When My Mode is executed, in the right area 355, the wind intensity icon and the level (stage) of the wind intensity are displayed. For example, the right area 355 is displayed in the form of a semicircular graph and is symmetrical to the left area 354, but the number of levels is different.

When an upper gauge bar of the currently set wind temperature level in the left area 354 is selected while My Mode is executed, the wind temperature increases by one level, and when a lower gauge bar of the currently set wind temperature level is selected, the wind temperature decreases by one level. However, when the currently set wind temperature level is selected, the temperature is designed not to change.

When an upper gauge bar of the currently set wind intensity level in the right area 355 is selected while My Mode is executed, the wind intensity increases by one level, and when a lower gauge bar of the currently set wind intensity level is selected, the wind intensity decreases by one level. However, when the currently set wind intensity level is selected, the intensity is designed not to change.

FIG. 4 is a diagram for explaining an operation of setting the temperature and intensity in My Mode shown in FIG. 3.

As shown in (a) of FIG. 4, when an upper area of the currently set temperature level is selected, the hair dryer outputs wind at a temperature that increases by one level. When the temperature is set to level 1 and a lower area of the current level is selected, the mode switches to cold air.

As shown in (b) of FIG. 4, when an upper area of the currently set intensity level is selected, the hair dryer outputs wind at a intensity that increases by one level. On the other hand, when a lower area of the currently set intensity level is selected, the hair dryer outputs wind at an intensity that decreases by one level.

However, although detailed level changes are possible with touch operations, for faster level changes, the present disclosure is designed to enable faster level changes than when using physical buttons, as shown in Table 1 below.

**[Table 1]**

| Temperature key input (short press) | | Intensity key input (short press) | |
|---|---|---|---|
| before | after | before | after |
| Cold air | Level 2 | Level 1 | Level 3 |
| Level 1 | | Level 2 | |
| Level 2 | Level 4 | Level 3 | Level 5 |
| Level 3 | | Level 4 | |
| Level 4 | Level 7 | Level 5 | Level 6 |
| Level 5 | | Level 6 | Level 3 |
| Level 6 | | N/A | N/A |
| Level 7 | Cold air | N/A | N/A |

The temperature key shown in Table 1 corresponds to, for example, the second button 130 shown in FIG. 1, and the intensity key shown in Table 1 corresponds to, for example, the third button 140 shown in FIG. 1.

The temperature levels to be set using the second button 130 illustrated in FIG. 1 are cycled through level 2, level 4, level 7, and cold air each time the second button 130 is pressed, as illustrated in Table 1 above.

On the other hand, the intensity levels to be set using the third button 140 illustrated in FIG. 1 are cycled through level 3, level 5, and level 6 each time the third button 140 is pressed, as illustrated in Table 1 above.

However, when a physical key button is selected in a state in which a level that is not a level to be set with the physical key button is set, it is also a feature of the present disclosure to move to the closest level to be settable with the physical key button among higher levels than the corresponding level with reference to Table 1 above.

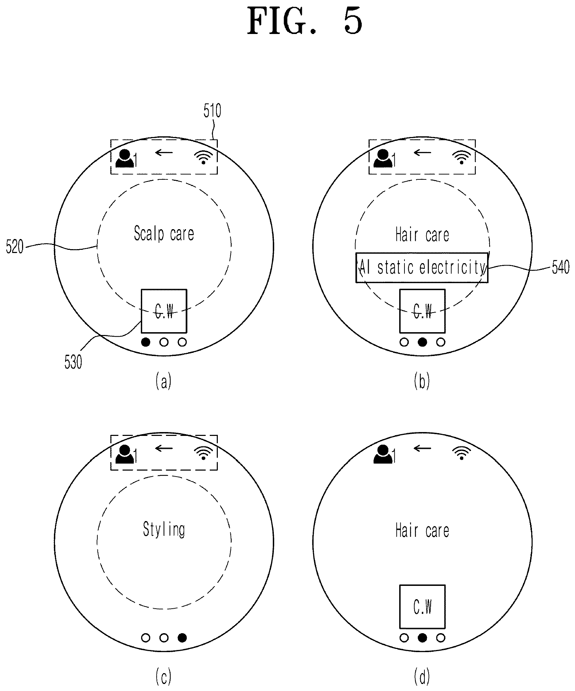

In FIG. 5, a recommended mode is defined according to one of embodiments of the present disclosure. As illustrated in FIG. 5, recommended modes according to an embodiment of the present disclosure include a scalp care mode, a hair care mode, a styling mode, and the like. However, adding, changing, or deleting other modes also falls within the scope of the present disclosure.

(a) of FIG. 5 shows a case in which the scalp care mode is provided as a recommended mode, and an AI option is turned off. As described above, at an upper end 510, a back button (which, when selected, moves to a mode selection screen), the currently selected user number, and a network connection state such as Wi-Fi are displayed.

A message 520 indicating the currently executed recommended mode, the scalp care mode, and a crosswind option 530 are additionally displayed.

(b) of FIG. 5 shows a case in which a hair care mode is provided as a recommended mode, and unlike (a) of FIG. 5, an AI static electricity option 540 is displayed. The AI static electricity option 540 may only be provided in the hair care mode. However, when the AI static electricity option is not executed, a text related to the AI option is designed not to be displayed, as in (d) of FIG. 5, to prevent user confusion.

(c) of FIG. 5 shows a case in which a styling mode is provided as a recommended mode, which also means a case in which an AI option is not executed.

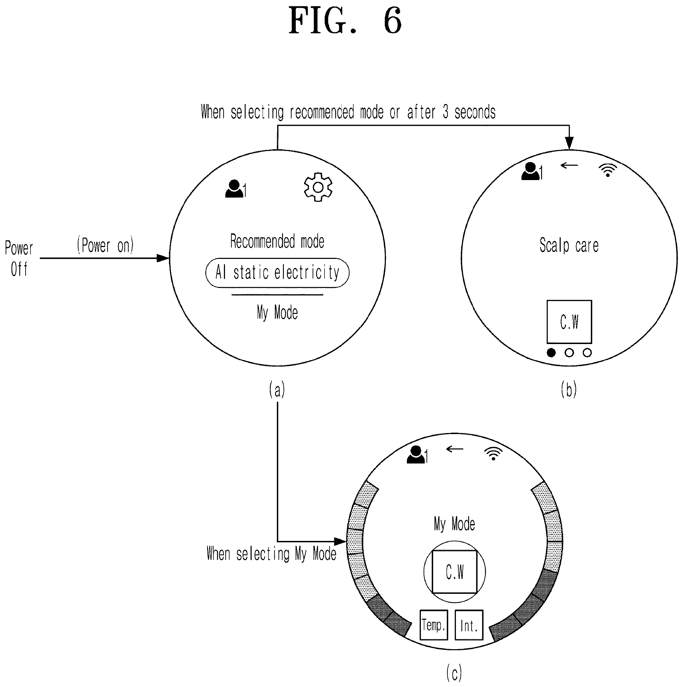

FIG. 6 illustrates a process of selecting a mode when using a hair dryer for the first time, according to one of embodiments of the present disclosure.

When the hair dryer according to an embodiment of the present disclosure is used for the first time, if power is turned on for the first time from an off state, a main menu screen is displayed as shown in (a) of FIG. 6.

In (a) of FIG. 6, when the recommended mode option is selected or there is no input such as a user touch for 3 seconds, the mode may automatically switch to the scalp care mode as shown in (b) of FIG. 6. In this case, it is assumed that the AI option is off.

On the other hand, in (a) of FIG. 6, when the My Mode option is selected, My Mode is automatically executed as shown in (c) of FIG. 6. However, there are no user settings yet, and thus the temperature is automatically output at level 2 and the wind intensity is automatically output at level 3 by default. This is a design obtained in consideration of the user's needs to use the hair dryer quickly.

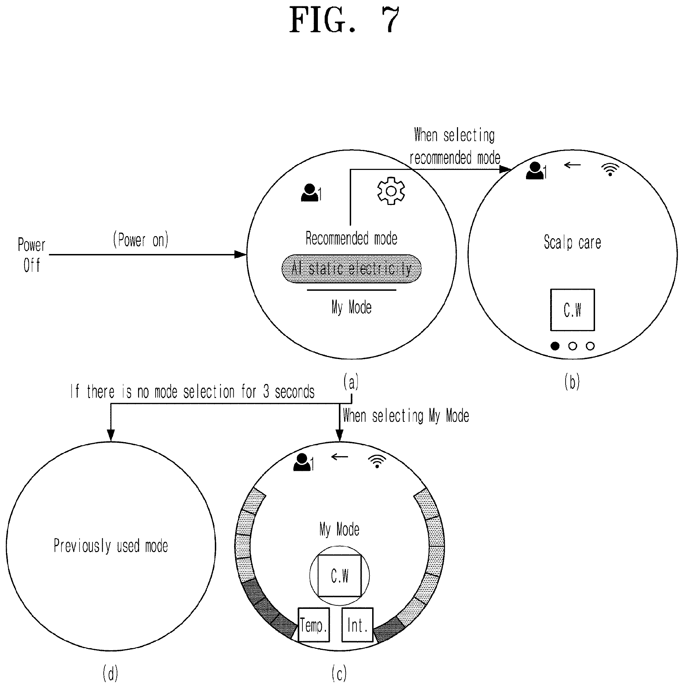

FIG. 7 illustrates a process of selecting a mode after using a hair dryer for the first time, according to one of embodiments of the present disclosure.

After the hair dryer according to an embodiment of the present disclosure is used for the first time, when power is turned on from an off state, a main menu screen is displayed as shown in (a) of FIG. 7.

In (a) of FIG. 7, when the recommended mode option is selected, the mode automatically switches to the scalp care mode, as shown in (b) of FIG. 7.

In (a) of FIG. 7, when the My Mode option is selected, the hair dryer is operated at the temperature and intensity of the wind set in My Mode, as shown in (c) of FIG. 7.

On the other hand, in (a) of FIG. 7, for example, if there is no input such as a user touch for 3 seconds, the mode automatically switches to a mode used immediately before.

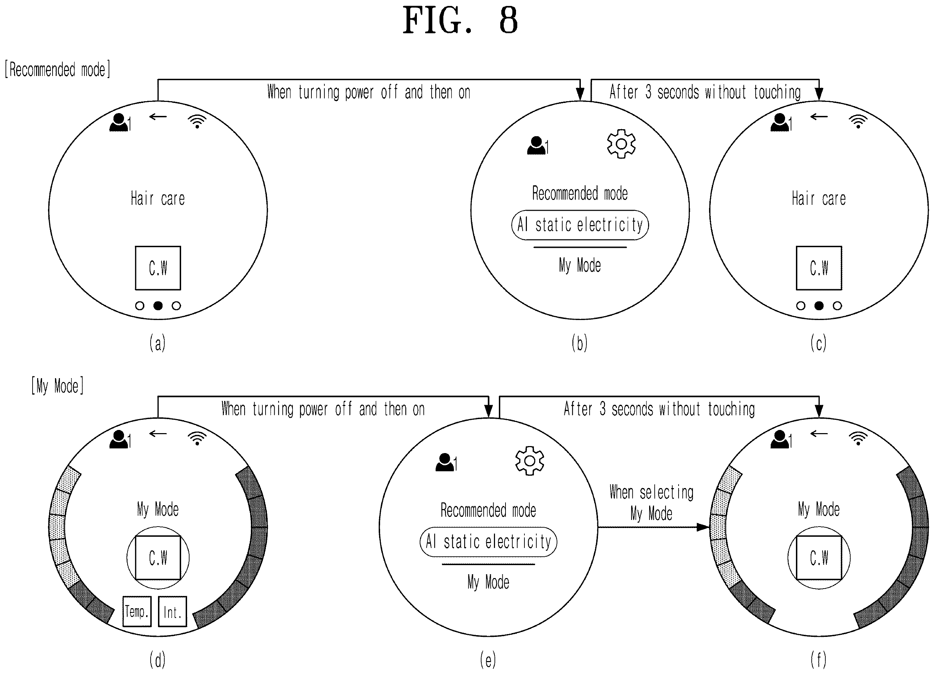

FIG. 8 illustrates a process of selecting a mode when turning the power of a hair dryer off and then on again according to one of embodiments of the present disclosure.

As shown in (a) of FIG. 8, it is assumed that the hair care mode is executed as the recommended mode and then the hair dryer is turned off. Then, when the hair dryer is turned on, the main menu is displayed as shown in (b) of FIG. 8. For example, if there is no touch input for 3 seconds, the hair care mode, which is one of the recommended modes, is automatically executed, as shown in (c) of FIG. 8. Therefore, it has an advantage of allowing users to use the hair dryer more quickly. When the hair dryer is turned off, information on whether the AI option is on or off is stored in memory and the like, and when the hair dryer is turned on again, the information stored in the memory is referenced to turn the AI option on or off.

As shown in (d) of FIG. 8, it is assumed that My Mode is executed and then the hair dryer is turned off. Then, when the hair dryer is turned on, the main menu is displayed as shown in (e) of FIG. 8. For example, if there is no touch input for 3 seconds or the My Mode option is selected, My Mode is executed as shown in (f) of FIG. 8.

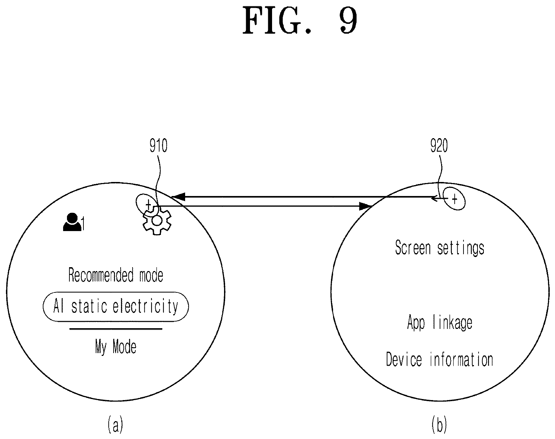

FIG. 9 illustrates a process of selecting a setting option according to one of embodiments of the present disclosure.

When a setting icon 910 is selected in the main menu shown in (a) of FIG. 9, the screen switches to a screen in which various settings of the hair dryer are to be checked or changed, as shown in (b) of FIG. 9. However, in this case, for the safety of the user, the hair dryer may be designed such that wind is not output through a discharge port.

When a touch gesture of selecting a back button 920 shown in (b) of FIG. 9 or swiping to the left is recognized, the screen returns to the main menu screen shown in (a) of FIG. 9.

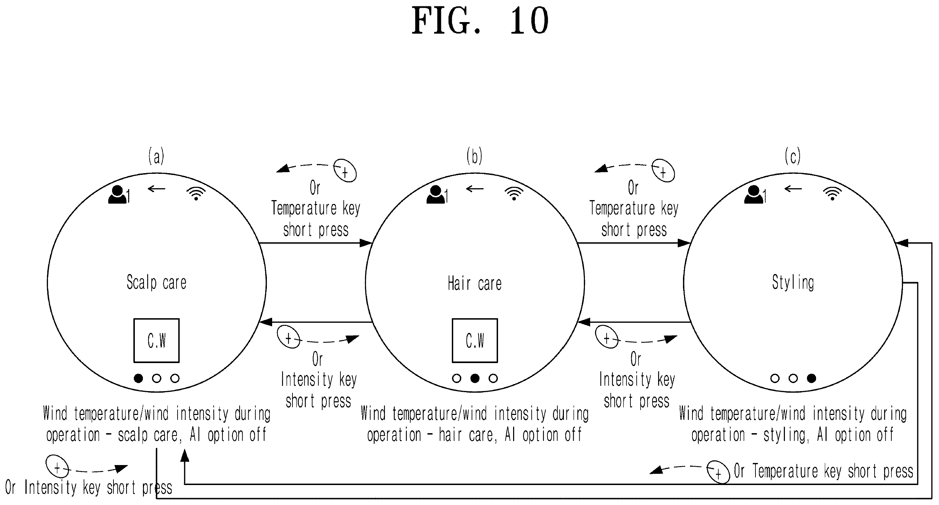

FIG. 10 illustrates a process of changing a mode according to one of embodiments of the present disclosure.

Hereinafter, with reference to FIG. 10, a trigger condition for switching to the scalp care mode, hair care mode, and styling mode belonging to the recommended mode will be described.

First, it is assumed that the scalp care mode shown in (a) of FIG. 10 is executed. For example, when the second button 130 illustrated in FIG. 1 is selected or a touch gesture of swiping to the left is recognized through the display, the mode switches to the hair care mode illustrated in (b) of FIG. 10.

When the hair care mode illustrated in (b) of FIG. 10 is executed, for example, when the second button 130 illustrated in FIG. 1 is selected or a touch gesture of swiping to the left is recognized through the display, the mode switches to the styling mode illustrated in (c) of FIG. 10.

On the other hand, when the styling mode shown in (c) of FIG. 10 is executed, for example, when the third button 140 shown in FIG. 1 is selected or a touch gesture of swiping to the right is recognized through the display, the mode switches to the hair care mode shown in (b) of FIG. 10.

While the hair care mode illustrated in (b) of FIG. 10 is executed, for example, when the third button 140 illustrated in FIG. 1 is selected or a touch gesture of swiping to the right is recognized through the display, the mode switches to the scalp care mode illustrated in (a) of FIG. 10.

In particular, by designing the wind temperature in the hair care mode to be higher than that in the scalp care mode and the wind temperature in the styling mode to be higher than that in the hair care mode, there is an advantage in that the user may more easily recognize a change in the recommended mode according to an operation of a temperature button.

By designing the hair care mode to have a higher wind intensity than the styling mode and the scalp care mode to have a higher wind intensity than the hair care mode, there is an advantage in that the user may more easily recognize a change in the recommended mode according to an operation of a intensity button.

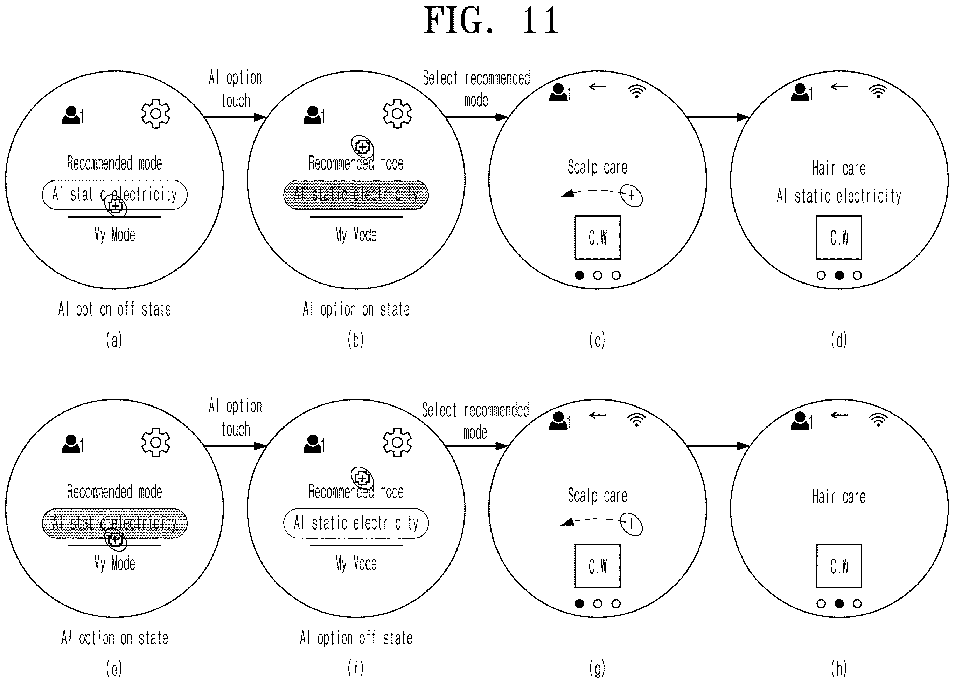

FIG. 11 illustrates a process of turning on/off an AI option of a recommended mode according to one of embodiments of the present disclosure.

First, as shown in (a) of FIG. 11, it is assumed that the AI option is turned off. In this case, if the AI static electricity option is selected, the AI static electricity option is displayed as activated, as shown in (b) of FIG. 11.

When the recommended mode option is selected in (b) of FIG. 11, the scalp care mode is executed as shown in (c) of FIG. 11. However, the scalp care mode has little to do with static electricity, and thus the AI static electricity option is not displayed or executed.

On the other hand, in the scalp care mode shown in (c) of FIG. 11, when a touch gesture of the user swiping to the left is recognized, the mode switches to the hair care mode as shown in (d) of FIG. 11. In this case, the AI static electricity option is displayed and executed. The hair care mode is designed in consideration of the possibility of much static electricity being generated.

As shown in (e) of FIG. 11, it is assumed that the AI option is turned on. In this case, if the AI static electricity option is selected, the AI static electricity option is displayed as deactivated, as shown in (f) of FIG. 11.

When the recommended mode option is selected in (f) of FIG. 11, the scalp care mode is executed as shown in (g) of FIG. 11. In the scalp care mode shown in (g) of FIG. 11, when a touch gesture of the user swiping to the left is recognized, the mode switches to the hair care mode as shown in (h) of FIG. 11. However, in this case, unlike (d) of Fig. 11, the AI static electricity option is not executed.

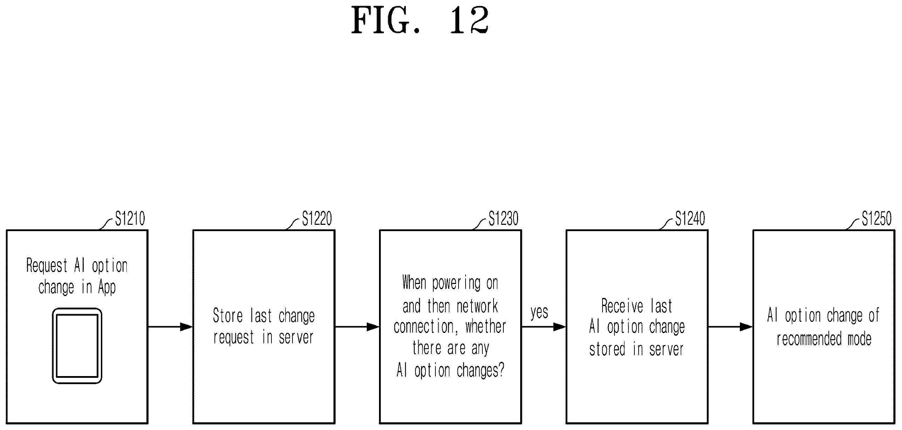

FIG. 12 illustrates a process of turning on/off an AI option of a recommended mode by using a mobile phone.

A request is made to change an AI option to be applied to the hair dryer by using an application downloaded to the mobile phone (S1210).

The last change request is saved in a server (S1220).

When the hair dryer is turned on and then connected to the network, it is determined whether there are any AI option changes (S1230).

As the determination result (S1230), when there is a change, the hair dryer receives the last AI option change stored in the server (S1240). In this case, the AI option values downloaded from the server may include the AI option name and whether the AI option is on or off.

The hair dryer automatically changes the AI option of the recommended mode (S1250).

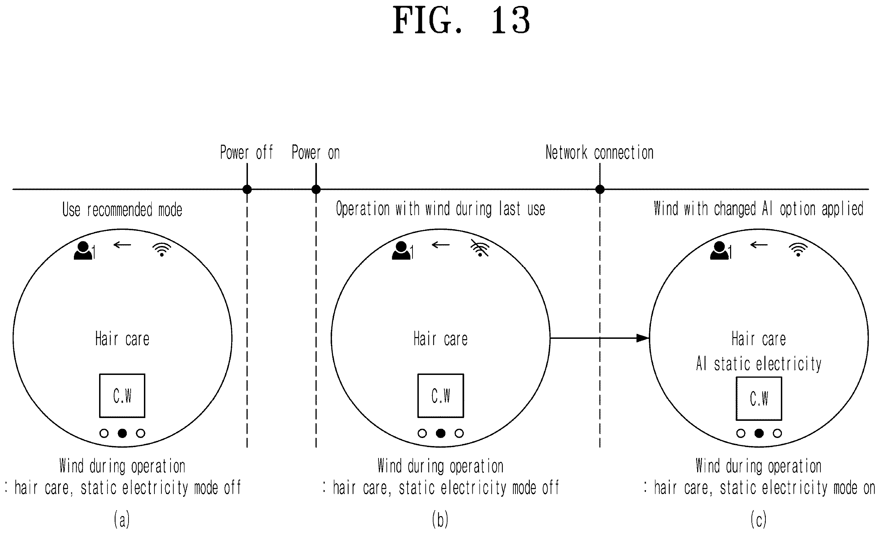

FIGS. 13 to 15 illustrate a process of turning on/off an AI option of a recommended mode according to the power and network connection state of a hair dryer, according to one of embodiments of the present disclosure.

FIG. 13 assumes that the hair care mode to which the AI option is applied among the recommended modes is executed immediately before the hair dryer is powered off, as shown in (a) of FIG. 13.

When the hair dryer is turned back on, the hair care mode is automatically executed, as shown in (b) of FIG. 13. However, in this case, the hair dryer is not connected to the network, and thus an AI option (e.g. AI static electricity mode) is turned off.

Then, when the hair dryer is connected to a network such as Wi-Fi, the hair care mode with an AI option (e.g., AI static electricity mode) applied is executed, as shown in (c) of FIG. 13.

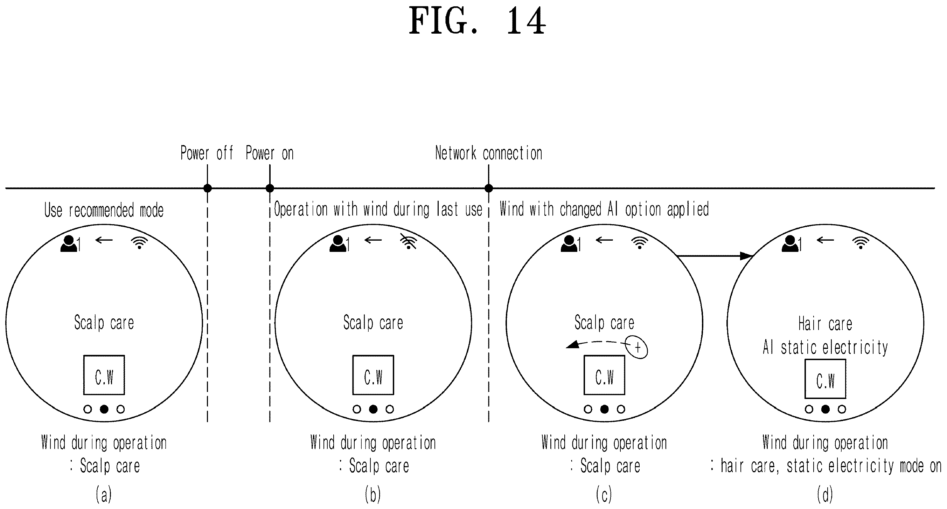

FIG. 14 assumes that the scalp care mode to which the AI option is not applicable among the recommended modes is executed immediately before the hair dryer is powered off, as shown in (a) of FIG. 14.

When the hair dryer is turned back on, the scalp care mode is automatically executed, as shown in (b) of FIG. 14.

Then, when the hair dryer is connected to a network such as Wi-Fi, as shown in (c) of FIG. 14, there is no special change because the AI static electricity option is not required in the scalp care mode.

However, when a touch gesture of the user swiping to the left is recognized, a hair care mode with an AI option (e.g., AI static electricity mode) applied is executed, as shown in (d) of FIG. 14.

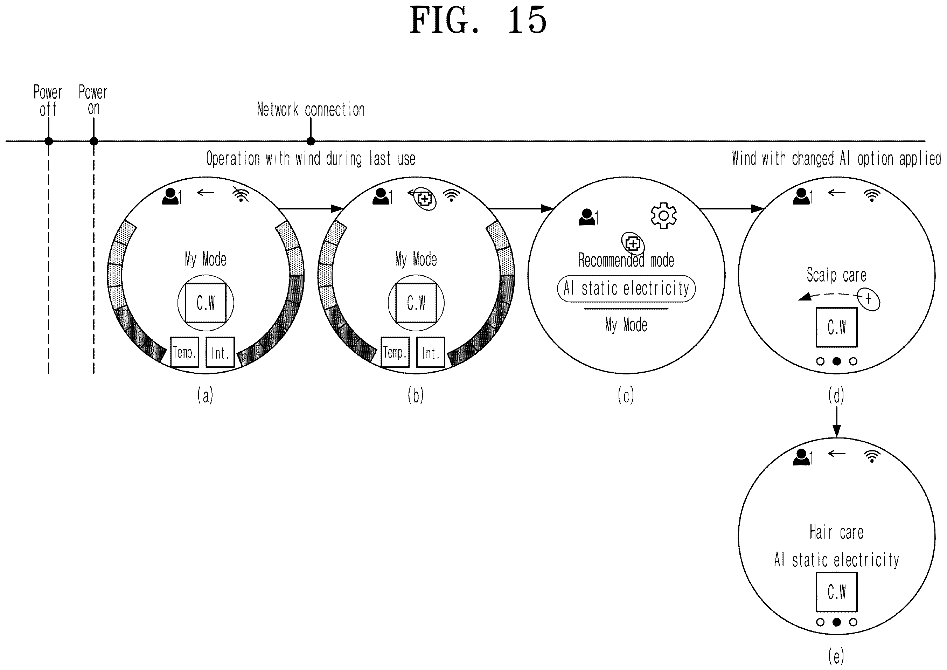

FIG. 15 assumes that My Mode is executed immediately before the hair dryer is powered off, as shown in (a) of FIG. 15.

When the hair dryer is connected to the network, as shown in (b) of FIG. 15, the hair dryer operates at, for example, wind temperature level 3 and wind intensity level 4 used before powering off.

When the user touches the back button in (b) of FIG. 15, the screen switches to the main menu screen as shown in (c) of FIG. 15. In this case, when the recommended mode option is selected, the scalp care mode is executed as shown in (d) of FIG. 15. When a touch gesture of the user swiping to the left is recognized in (d) of FIG. 15, the mode switches to the hair care mode as shown in (e) of FIG. 15. The current state is a network-connection state, an AI static electricity option may be additionally applied.

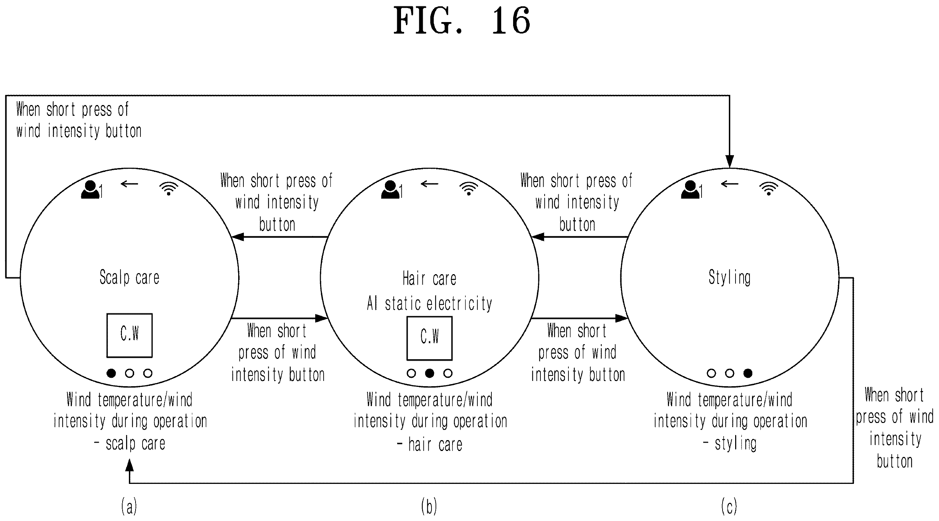

FIG. 16 illustrates a process of controlling a hair dryer with a physical button and outputting a result value to a display in a recommended mode according to one of embodiments of the present disclosure.

As shown in (a) of FIG. 16, it is assumed that the scalp care mode is currently executed among the recommended modes. In this case, when a physical key button for adjusting the wind intensity is selected, the mode switches to a styling mode shown in (c) of FIG. 16.

In the styling mode shown in (c) of FIG. 16, when the physical key button for adjusting the wind intensity is selected, the mode switches to the hair care mode shown in (b) of FIG. 16.

In the hair care mode shown in (b) of FIG. 16, when the physical key button for adjusting the wind intensity is selected, the mode returns to the scalp care mode shown in (a) of FIG. 16.

On the other hand, when the physical key button for adjusting the wind temperature is selected, it is designed to operate in the opposite order of the process described above.

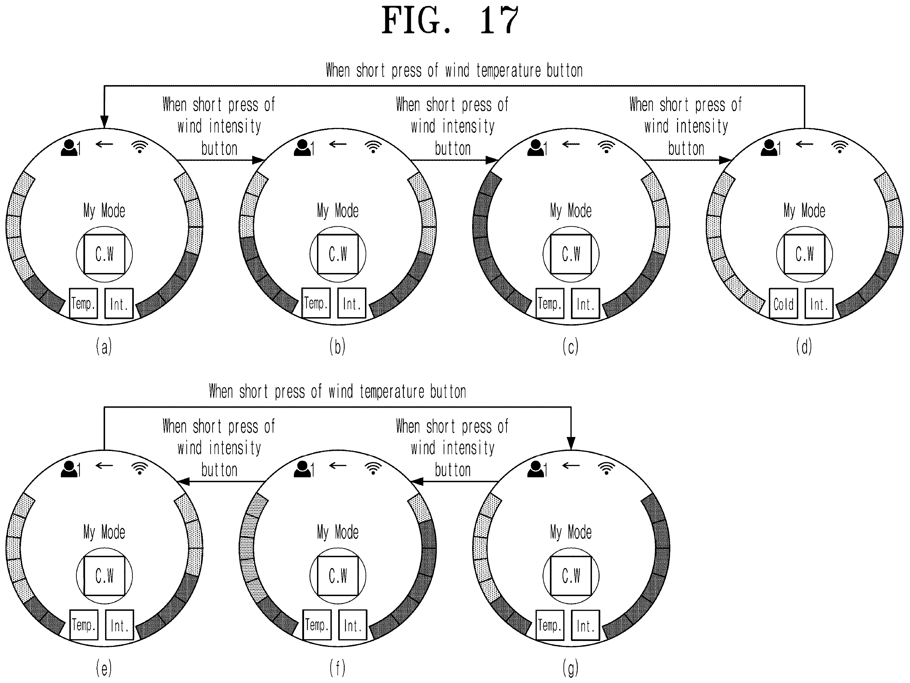

FIG. 16 shows an embodiment of a recommended mode, and an embodiment of My Mode will be described below with reference to FIG. 17.

FIG. 17 illustrates a process of controlling a hair dryer with a physical button and outputting a result value to a display in My Mode according to one of embodiments of the present disclosure.

As shown in (a) of FIG. 17, it is assumed that a level of wind temperature in My Mode is set to 2 and a level of wind intensity is set to 3.

As described in Table 1 above, when the physical key button for adjusting the wind temperature is selected, the wind temperature is adjusted to level 4 and the wind intensity is maintained without change, as shown in (b) of FIG. 17.

Then, when the physical key button for adjusting the wind temperature is selected again, the wind temperature is adjusted to level 7 and the wind intensity is maintained without change, as shown in (c) of FIG. 17.

Then, when the physical key button for adjusting the wind temperature is selected again, a temperature icon is changed to a cold air icon, as shown in (d) of FIG. 17, and cold air is output through the hair dryer.

As shown in (e) of FIG. 17, it is assumed that a level of wind temperature in My Mode is set to 2 and a level of wind intensity is set to 3.

As described in Table 1 above, when the physical key button for adjusting the wind intensity is selected, the wind intensity is adjusted to level 6 and the wind temperature is maintained without change, as shown in (g) of FIG. 17.

Then, when the physical key button for adjusting the wind intensity is selected again, the wind intensity is adjusted to level 5 and the wind temperature is maintained without change, as shown in (f) of FIG. 17.

Then, when the physical key button for adjusting the wind intensity is selected again, the mode returns to (e) of FIG. 17.

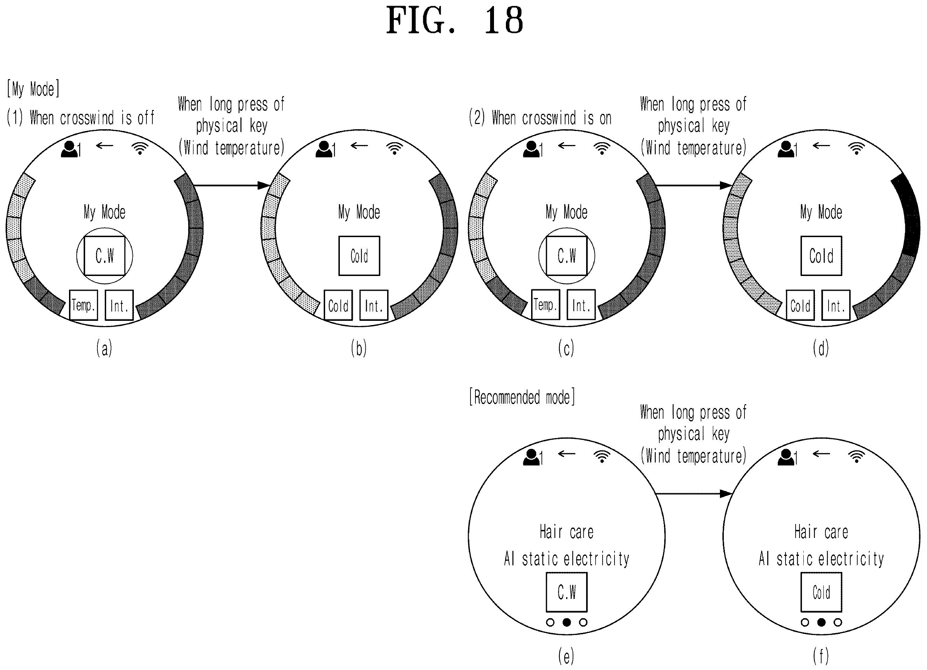

FIG. 18 illustrates a process of outputting a result value to a display when a specific physical button is long pressed according to one of embodiments of the present disclosure.

(a) of FIG. 18 assumes that crosswind is off in My Mode. In this case, when the physical key button for adjusting the wind temperature is long pressed for a preset time or longer, as shown in (b) of FIG. 18, the temperature icon changes to the cold air icon, and the hair dryer according to an embodiment of the present disclosure outputs cold air.

(c) of FIG. 18 assumes that crosswind is on in My Mode. In this case, when the physical key button for adjusting the wind temperature is long pressed for a preset time or longer, as shown in (d) of FIG. 18, the temperature icon changes to a cold air icon, and the hair dryer according to an embodiment of the present disclosure outputs cold air.

(e) of FIG. 18 assumes that the hair care mode among the recommended modes is currently executed. In this case, when the physical key button for adjusting the wind temperature is long pressed for a preset time or longer, as shown in (f) of FIG. 18, a crosswind icon changes to the cold air icon, and the hair dryer according to an embodiment of the present disclosure outputs cold air.

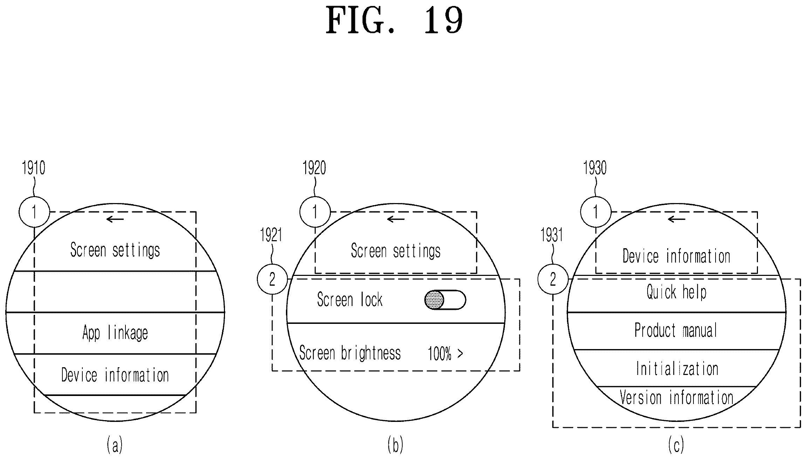

FIG. 19 illustrates a basic process of changing settings of a hair dryer according to one of embodiments of the present disclosure.

When the setting icon is selected in the main menu 210 illustrated in FIG. 2, the screen switches to a screen 1910 illustrated in (a) of FIG. 19.

When a back icon is selected, the screen switches to a mode selection screen, and when an app linking option is selected, the screen moves to an app linking setting screen.

When a screen setting option is selected, the screen moves to a screen for screen brightness and screen lock settings. That is, in the screen 1910 shown in (a) of FIG. 19, when the screen setting option is selected, a back button 1920 for returning to a previous screen and a menu 1921 for adjusting a screen lock (e.g., set to off by default) or screen brightness (e.g., set to 100 % by default) are displayed, as shown in (b) of FIG. 19.

When a device information option is selected, the screen moves to a screen such as quick help, product manual, initialization, and version information. That is, in the screen 1910 shown in (a) of FIG. 19, when a device information option is selected, as shown in (c) of FIG. 19, a back button 1930 for returning to a previous screen and a menu 1931 for checking quick help (which allows an initial guide to be viewed again), a product manual (which provides a link to install a related application via a QR code and guides the location of the product manual in the application), initialization (wind temperature and wind intensity of each mode are changed to default values after Wi-Fi information and user nickname information of a device and the usage history data stored in the device are deleted), and a version (firmware version display, control version, a LCD version, and the like) are displayed.

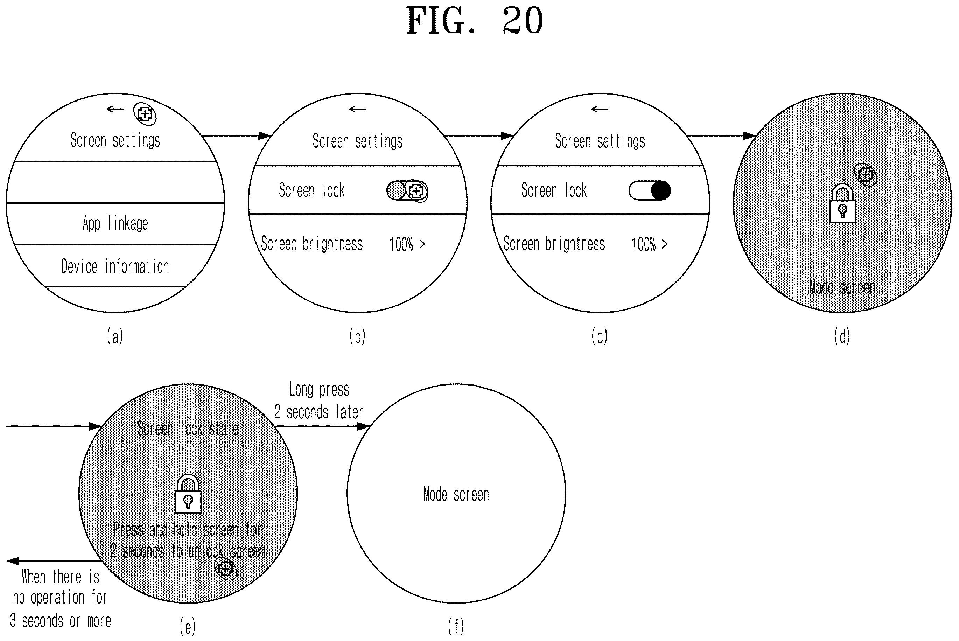

FIG. 20 illustrates a process of locking a display screen of a hair dryer according to one of embodiments of the present disclosure.

In the setting main screen shown in (a) of FIG. 20, when the screen setting option is selected, options for adjusting the screen lock or screen brightness are displayed, as shown in (b) of FIG. 20. In (b) of FIG. 20, when a physical key button is input, a pop-up message indicating that the operation is not possible may be displayed. Therefore, it has an advantage of preventing user confusion.

In this case, when a screen lock option is selected, as shown in (c) of FIG. 20, a toggle button for screen lock moves to the right, and as shown in (d) of FIG. 20, the screen switches to a mode screen that is used before entering the settings (feedback is provided to a user that normal touch is not possible through shaded display) and the wind temperature and intensity are changed to those before entering the settings.

In the screen lock state of (d) of FIG. 20, when a touch input of a user is applied, as shown in (e) of FIG. 20, an additional guidance message is displayed indicating that the screen lock is released when the screen is pressed for, for example, 2 seconds.

Therefore, when a long touch of the user is recognized for 2 seconds or longer, the screen is unlocked and the currently executed mode screen is displayed normally, as shown in (f) of FIG. 20. However, in (e) of FIG. 20, when there is no other touch input from the user for about 3 seconds, the mode returns to (d) of FIG. 20.

However, for user convenience and quick access, when the hair dryer is turned off in the locked state and then turned back on, the screen lock state is automatically released. The locking of a hair dryer has a different purpose from that of a mobile phone, and thus it is also a feature of the present disclosure to provide such a modified design.

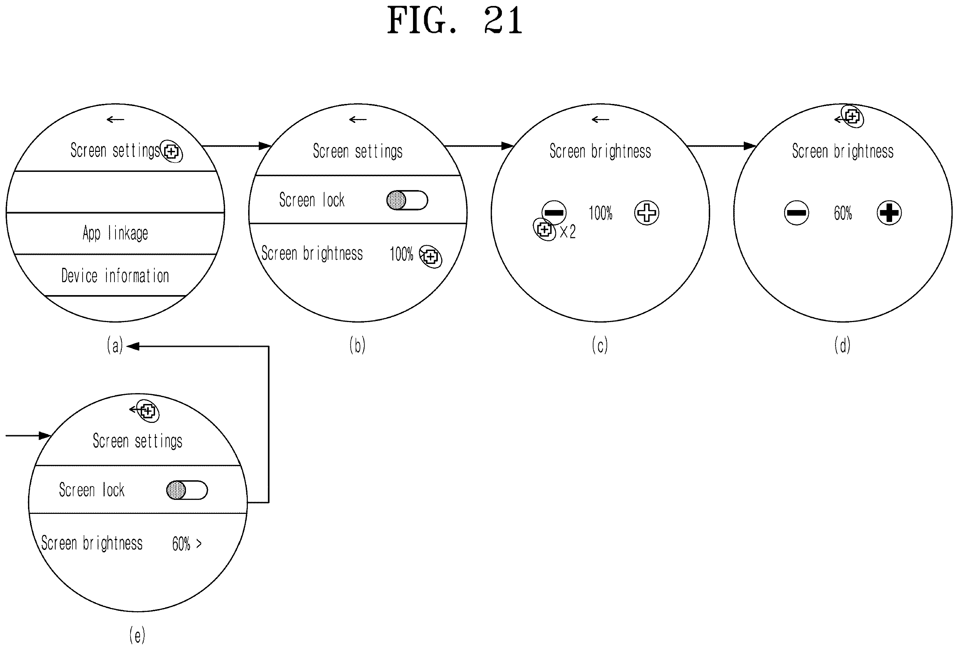

FIG. 21 illustrates a process of adjusting display brightness of a hair dryer according to one of embodiments of the present disclosure.

In the setting main screen shown in (a) of FIG. 21, when the screen setting option is selected, options for adjusting the screen lock or screen brightness are displayed, as shown in (b) of FIG. 21. There is also an advantage in ensuring user safety by designing the hair dryer such that no wind is blown out when the setting options are displayed.

In this case, when the screen brightness option is selected, the current screen brightness and a plus icon and minus icon for adjusting the brightness are displayed together, as shown in (c) of FIG. 21. However, when the current screen brightness is 100%, deleting or deactivating the plus icon may have an effect of preventing unnecessary touches from the user. When the current screen brightness is 20%, the minus icon may be deleted or deactivated.

When the minus icon shown in (c) of FIG. 21 is touched twice, the screen brightness is lowered to 60 %, as shown in (d) of FIG. 21, but the plus icon is activated again. In the present specification, the units of screen brightness to be set are described as 5 levels: 20 %, 40 %, 60 %, 80 %, and 100 % (default), but the present disclosure is not necessarily limited thereto.

During the screen setting process illustrated in FIG. 21, when a push is detected on the physical key button of the hair dryer, a pop-up message indicating that the operation is not possible may be additionally displayed.

When the back button is selected in the screen shown in (d) of FIG. 21, the screen returns to the screen for screen settings as shown in (e) of FIG. 21.

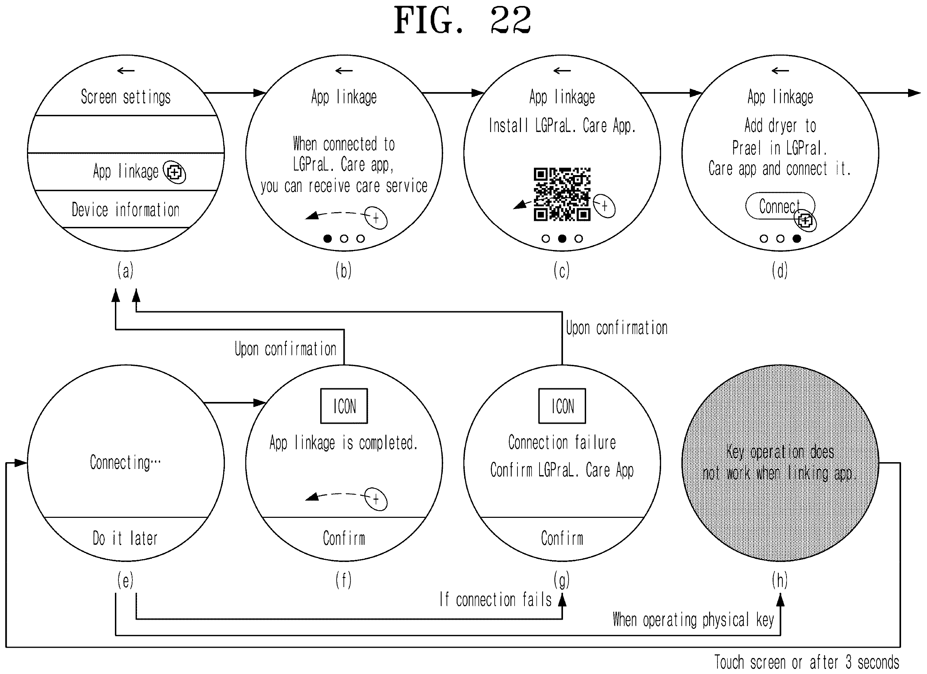

FIG. 22 illustrates a process of linking an application downloaded to an external device connected to a hair dryer via a network according to one of embodiments of the present disclosure.

In the setting main screen shown in (a) of FIG. 22, when the app linking option is selected (as described above, the hair dryer is designed not to blow air in this case), a guidance message is displayed indicating that care services are to be received when linked with a specific application (e.g., LG Pra.L Care app) as shown in (b) of FIG. 22.

In this case, when a touch gesture of user swiping to the left is recognized, a QR code that allows a related application to be installed on an external device (e.g., a mobile phone) is displayed, as shown in (c) of FIG. 22.

In this case, when a touch gesture of user swiping to the left is recognized, an option to connect to an external device for which a related application has been downloaded is additionally displayed, as shown in (d) of FIG. 22.

When the corresponding option is selected, a message indicating that connecting is currently executed is displayed, as shown in (e) of FIG. 22.

When connection between the hair dryer and the external device according to an embodiment of the present disclosure is successful, a message indicating that app linkage is complete is displayed, as shown in (f) of FIG. 22.

In contrast, when connection between the hair dryer and the external device according to an embodiment of the present disclosure fails, a message indicating that app linkage has failed is displayed, as shown in (g) of FIG. 22.

When an operation on the physical key button of the hair dryer is detected, a guidance message is output that a key operation is not possible during app linkage, as shown in (h) of FIG. 22.

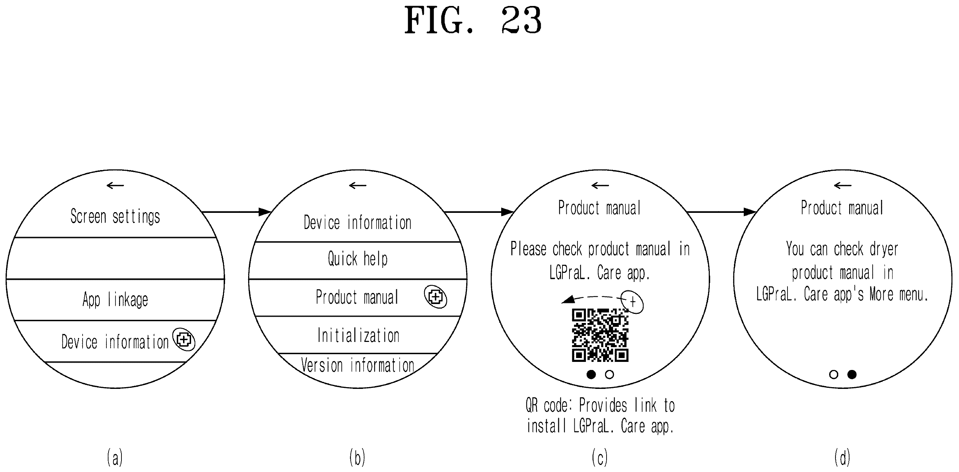

FIG. 23 illustrates a process of checking device information of a hair dryer according to one of embodiments of the present disclosure.

In the setting main screen shown in (a) of FIG. 23, when the device information option is selected (as described above, the hair dryer is designed not to blow air in this case), options related to quick help, options related to product manual, options related to initialization, and options related to version information are displayed, as shown in (b) of FIG. 23.

In this case, the product manual related option is selected, a QR code is displayed such that the product manual may be checked, as shown in (c) of FIG. 23.

When a touch gesture of user swiping to the left is recognized in the state shown in (c) of FIG. 23, a detailed message is displayed that allows the user to check the product manual for any item in an application downloaded through the QR code described above, as shown in (d) of FIG. 23.

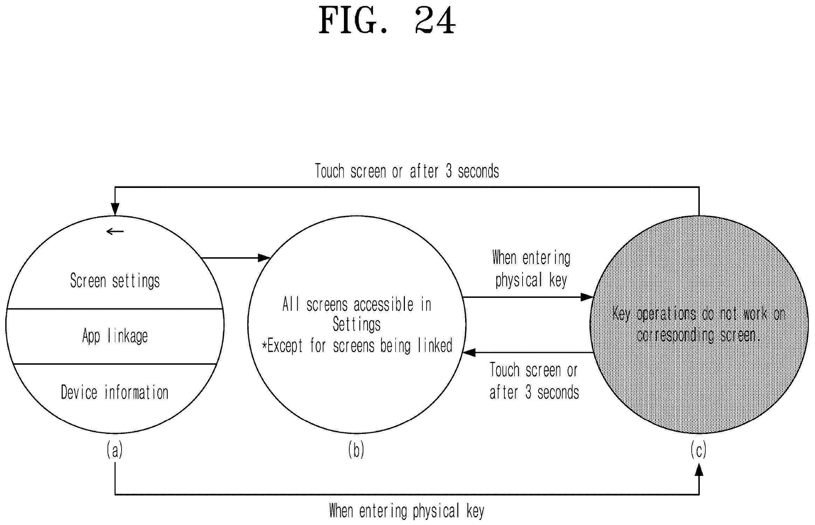

FIG. 24 illustrates an image displayed on a display when a physical button is selected in a specific state of a hair dryer according to one of embodiments of the present disclosure. In the present disclosure, feedback regarding a user's mistake in attempting to manipulate a setting option with a physical key button is important. Otherwise, the user may mistake the hair dryer for a malfunction.

For example, as shown in (a) of FIG. 24, it is assumed that a setting-related menu is displayed.

In this case, an operation on a physical key button, rather than a touch input on the display of the hair dryer, is recognized, a message is displayed indicating that the current key operation mode is not possible, as shown in (c) of FIG. 24.

Even when entering the detailed menu for settings through touch input, as shown in (b) of FIG. 24, if an operation on a physical key button is recognized, a message indicating that the current key operation is not possible is displayed, as shown in (c) of FIG. 24.

In the screen shown in (c) of FIG. 24, the user may operate through touch by recognizing a touch or returning to the previous screen ((b) or (a) of FIG. 24) after a certain period of time, for example, 3 seconds.

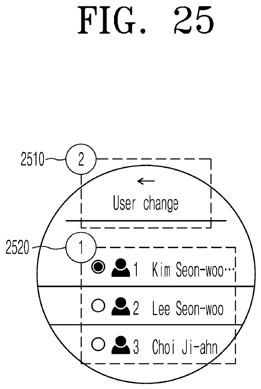

FIG. 25 illustrates a menu for user change of a hair dryer according to one of embodiments of the present disclosure.

When the user icon shown in FIG. 2 above is selected, a back icon 2510 (when selected, moves to the mode selection screen) and an option 2520 for selecting a user are displayed, as shown in FIG. 25.

In FIG. 25, three users are displayed at a time as selectable users, but the present disclosure is not necessarily limited thereto. User #1 is set by default. The user nickname is displayed with a maximum of 3 Korean/English/number characters, and when exceeding this limit, the user nickname is displayed as "...". This is a design that takes into account a small size display of the hair dryer.

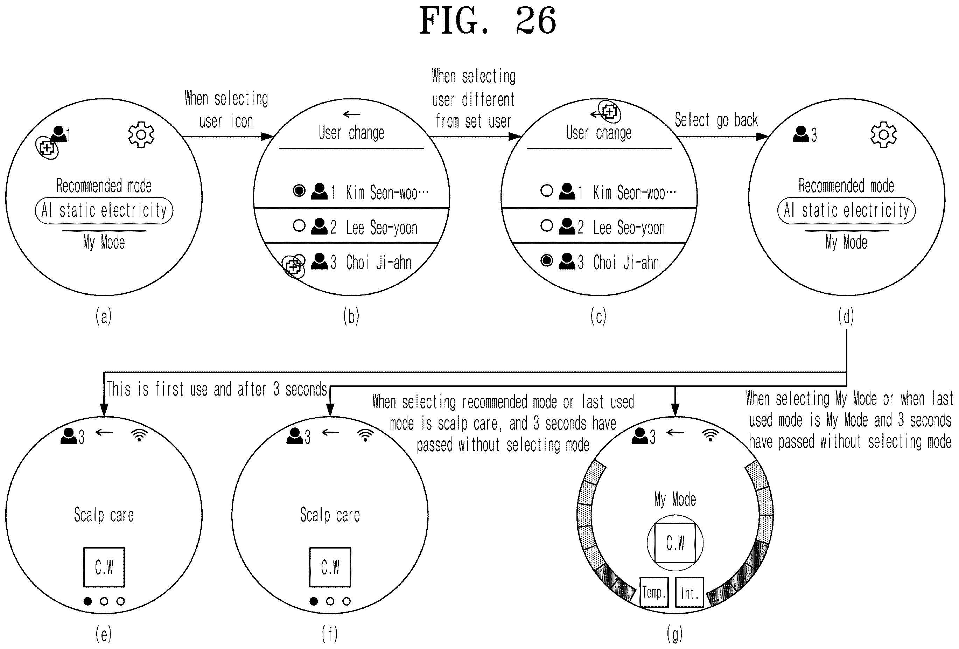

FIG. 26 illustrates a process for user change of a hair dryer according to one of embodiments of the present disclosure.

As shown in (a) of FIG. 26, it is assumed that user #1 uses the hair dryer immediately before. In this case, when the user icon is selected, the nicknames of changeable users are displayed, as shown in (b) of FIG. 26.

In this case, when user #3 (Ji-an Choi) is selected, an indicator (black circle) indicating that user #3 has been selected is displayed, as shown in (c) of FIG. 26. When the back button is selected, an icon indicating that the user has changed to user #3 is displayed at an upper end, as shown in (d) of FIG. 26.

When user #3 uses the hair dryer according to an embodiment of the present disclosure for the first time (there is no previous usage history in a memory), and 3 seconds pass without selecting a mode, the scalp care mode among the recommended modes is automatically executed, as shown in (e) of FIG. 26.

In contrast, when a mode in which user #3 last uses the hair dryer according to an embodiment of the present disclosure is the scalp care mode, and 3 seconds pass without selecting a mode, the scalp care mode among the recommended modes is automatically executed, as shown in (f) of FIG. 26. Whether the AI option is turned on or off is also determined based on a reference previously set by user #3.

When a mode in which user #3 last uses the hair dryer according to an embodiment of the present disclosure is My Mode, and 3 seconds pass without selecting a mode, My Mode is automatically executed, as shown in (g) of FIG. 26. The wind temperature and intensity are based on previously used log data.

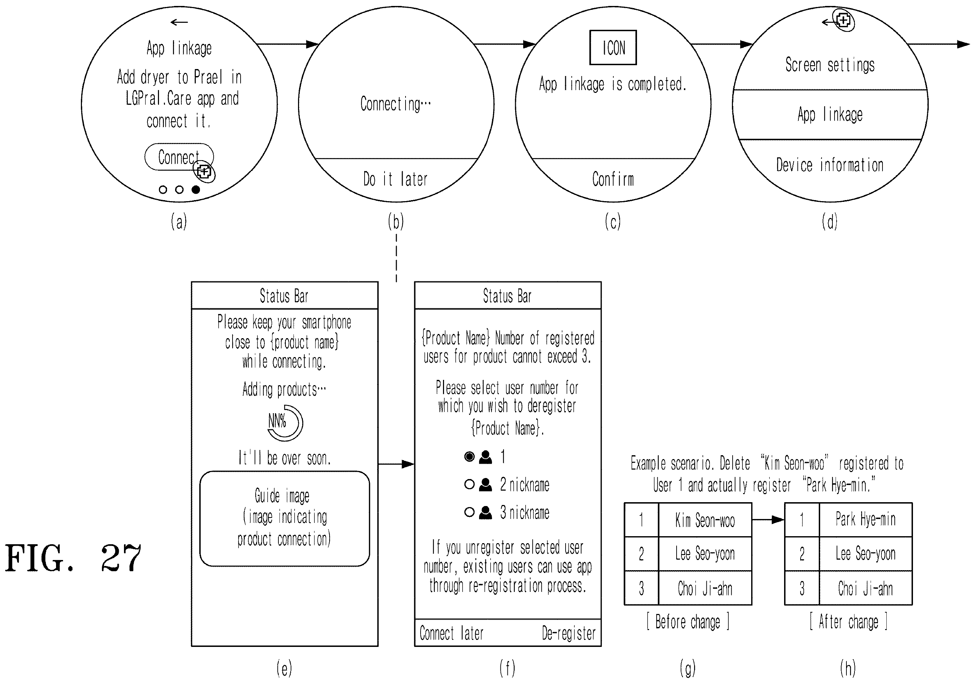

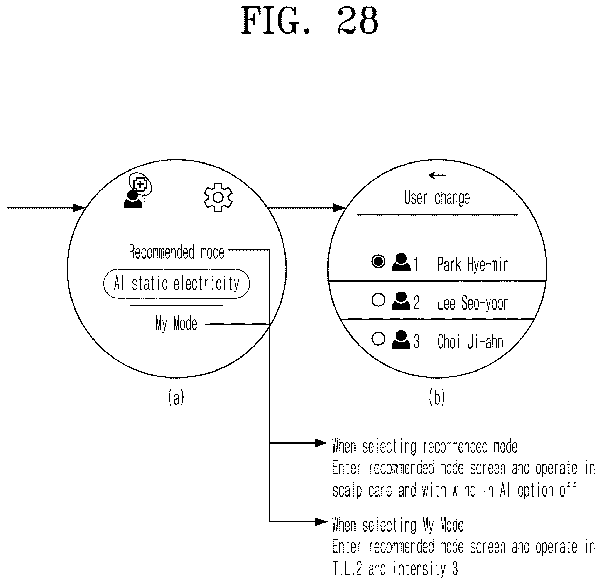

FIGS. 27 and 28 illustrate a process of changing a user of a hair dryer by using an external device.

As shown in (a) of FIG. 27, a hair dryer according to an embodiment of the present disclosure displays an option for connection with an external device (e.g., mobile phone) through a display.

When the corresponding option is selected, a message indicating that connection is in progress is displayed, as shown in (b) of FIG. 27, and a message indicating that app linkage is complete is displayed, as shown in (c) of FIG. 27.

In this case, using a mobile phone, which is an example of the external device connected to the hair dryer, a user who will use the hair dryer may be designated, added, changed, deleted, and the like as shown in (e) and (f) of FIG. 27.

For example, as shown in (g) of FIG. 27, it is assumed that Kim Seon-woo is registered as user #1 before user change. It is assumed that user #1 is changed to Park Hye-min by using a mobile phone connected to a hair dryer, as shown in (h) of FIG. 27.

In a setting screen of the hair dryer shown in (d) of FIG. 27, when the back button is selected, the screen returns to the main menu screen shown in (a) of FIG. 28. When the user icon is selected, Park Hye-min, who has been changed to user #1, is displayed as shown in (b) of FIG. 28.

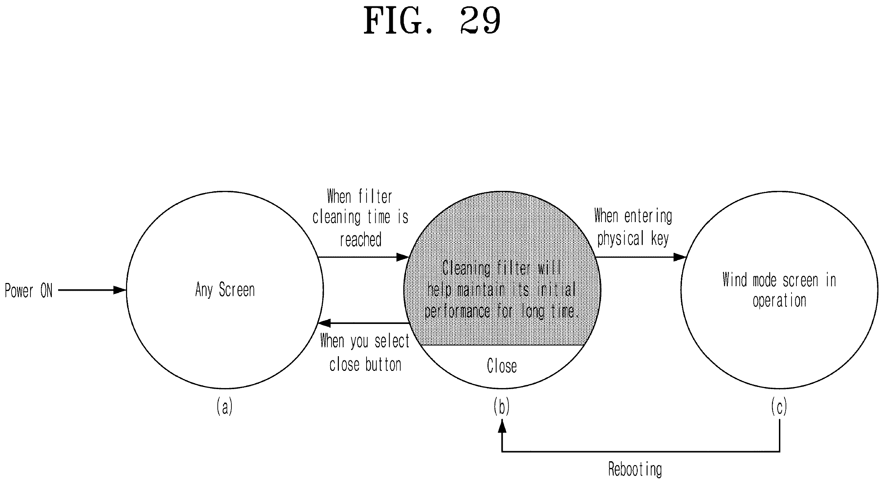

FIG. 29 illustrates a process of outputting a filter cleaning notification of a hair dryer to a display according to one of embodiments of the present disclosure.

When the hair dryer according to an embodiment of the present disclosure is powered on, an arbitrary mode screen is displayed as shown in (a) of FIG. 29.

However, when a filter cleaning period (e.g., 120 hours) is reached, a guidance message regarding a need for filter cleaning is displayed, as shown in (b) of FIG. 29.

When pop-up shown in (b) of FIG. 29 is provided in a state in which the wind blows, an operation mode is displayed as shown in (c) of FIG. 29 when a physical key button is input.

When the notification shown in (b) of FIG. 29 needs to be displayed in the locked state, the notification pop-up is designed to be displayed above the locked layer. This has an advantage of prompting users to clean the filter as quickly as possible.

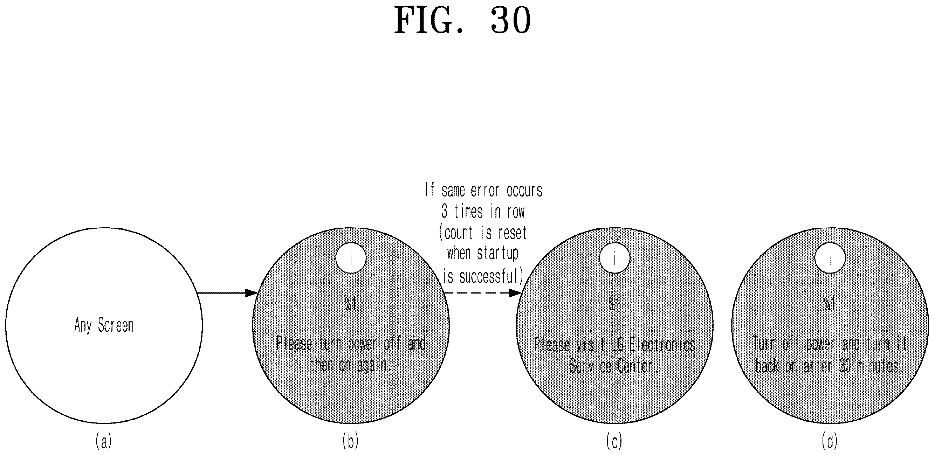

FIG. 30 illustrates a process of outputting an error notification display of a hair dryer according to one of embodiments of the present disclosure.

As shown in (a) of FIG. 30, it is assumed that a hair dryer according to an embodiment of the present disclosure displays an arbitrary screen.

In this case, when an error occurs in relation to the system, motor control, heater control, and the like, a guidance message and error code (e.g., %1) are displayed as shown in (b) of FIG. 30.

When the same error occurs, for example, three times in a row, a stronger guide message is displayed to visit an AS service center, as shown in (c) of FIG. 30.

When a serious error such as overtemperature of a motor occurs, a guide message is displayed to ask to turn the hair dryer on after 30 minutes of turning off, as shown in (d) of FIG. 30.

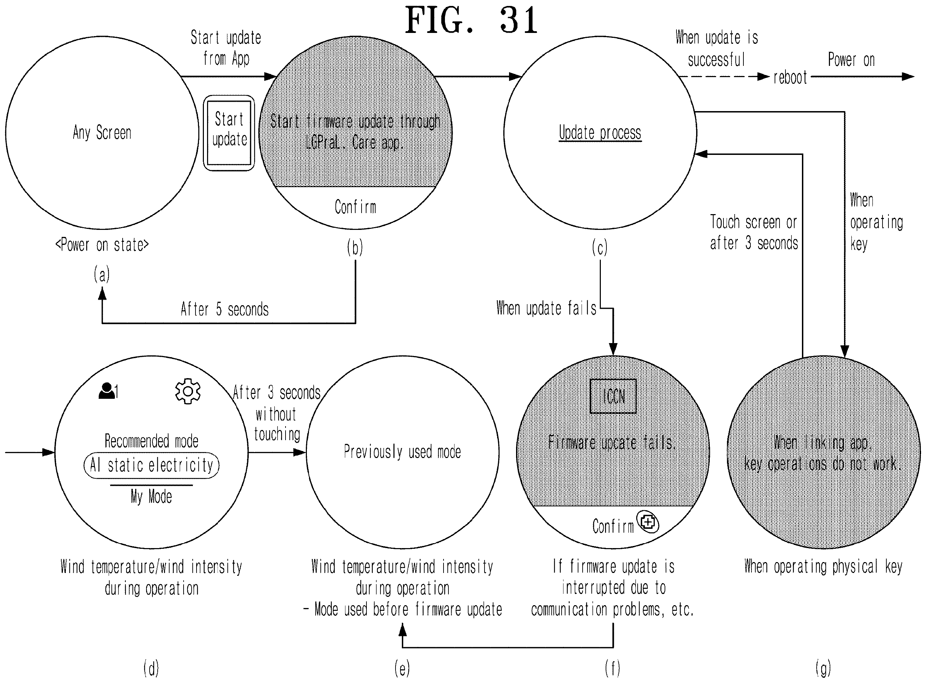

FIGS. 31 to 34 illustrate a firmware update process of a hair dryer according to one of embodiments of the present disclosure.

As shown in (a) of FIG. 31, it is assumed that a hair dryer according to an embodiment of the present disclosure displays an arbitrary screen.

In this case, when an update of a related application is started through a mobile phone or the like connected to the hair dryer, a message indicating that an update starts is displayed as shown in (b) of FIG. 31, and a message indicating that an update process is in progress is displayed as shown in (c) of FIG. 31.

Upon successful update, the hair dryer is rebooted, the main menu screen shown in (d) of FIG. 31 is displayed, and if no touch is recognized for 3 seconds, the previously used mode is displayed, as shown in (e) of FIG. 31, and the hair dryer operates according to the corresponding mode.

On the other hand, when the update fails, a guide message indicating that the update has failed is displayed, as shown in (f) of FIG. 31. When the "Confirm" option included in the guide message is selected, the touch display of the hair dryer changes to a guide message indicating "The system will restart" and rebooting begins after a certain period of time (e.g., 3 seconds), which is also within the scope of the present disclosure.

When the physical key button operation of the hair dryer is recognized during the update, a guide message is displayed indicating that key operation is not possible during app linkage, as shown in (g) of FIG. 31.

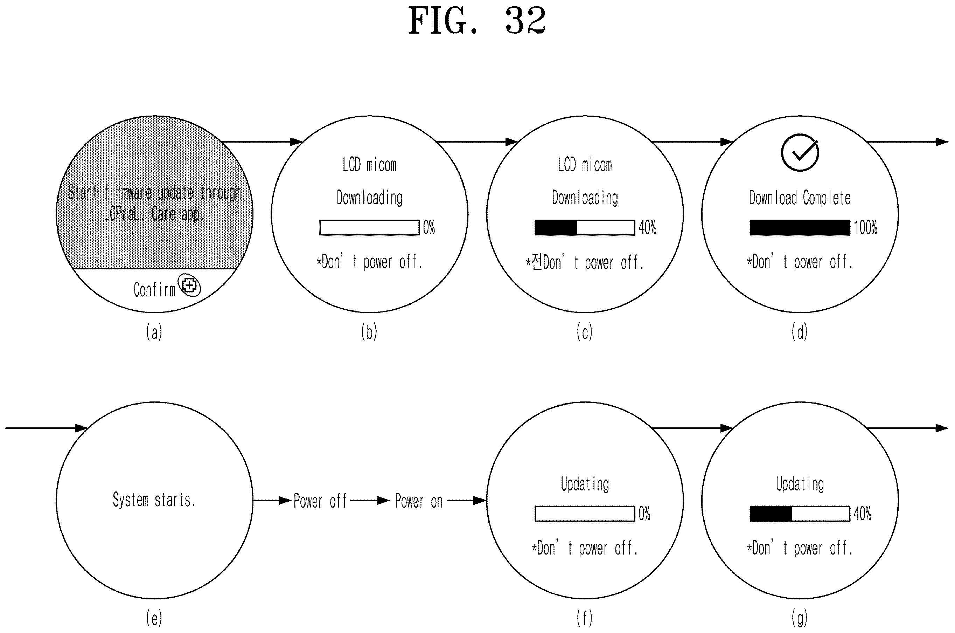

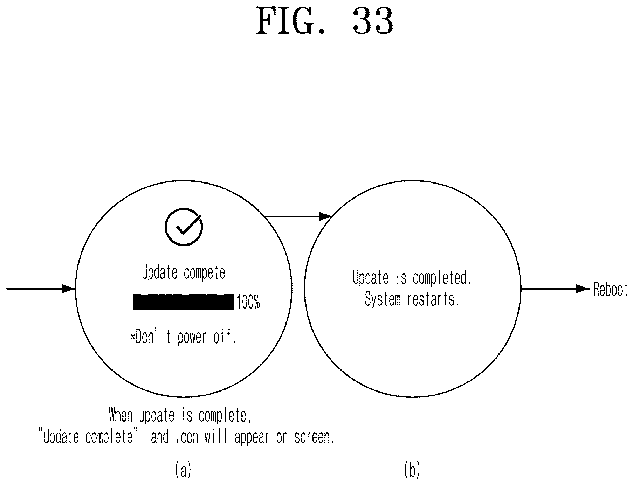

FIGS. 32 and 33 show a process of performing LCD and Wi-Fi related updates.

As shown in (a) of FIG. 32, when an confirmation option for firmware update is selected, a message indicating that a related file is currently downloaded, a progressive bar, and a warning message not to turn off the power are displayed together, as shown in (b) and (c) of FIG. 32.

When the download is complete, a completion guidance message is displayed as shown in (d) of FIG. 32, and a message indicating that the system is restarted is displayed as shown in (e) of FIG. 32.

After changing the power of the hair dryer to the off state and then to the on state, a message indicating that the remaining files are currently updated is displayed, as shown in (f) and (g) of FIG. 32.

Then, as shown in (a) of FIG. 33, an update completion message is displayed, and then, as shown in (b) of FIG. 33, a guidance message indicating that the system is to be rebooted is displayed.

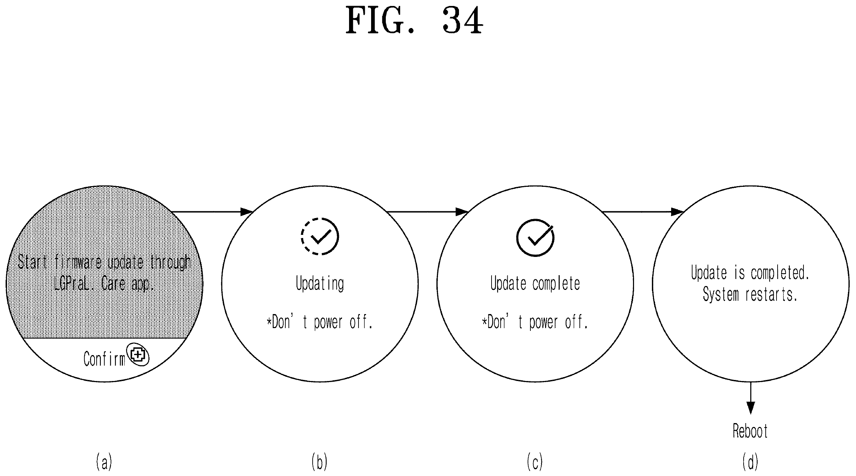

FIG. 34, unlike FIG. 33, shows a process that simply performs a Wi-Fi-related update. In this case, the update is performed at a relatively fast speed, and thus unlike in FIG. 33, there is a technical effect of minimizing the power consumption of the hair dryer by designing the hair dryer such that the progressive bar is not displayed.

For example, as shown in (a) of FIG. 34, when the confirmation option for firmware update is selected, a message indicating that the update is in progress and a warning message not to turn off the power are displayed together, as shown in (b) of FIG. 34.

Then, as shown in (c) of FIG. 34, an update completion message is displayed, and then, as shown in (d) of FIG. 34, a guidance message indicating that the system is to be rebooted is displayed.

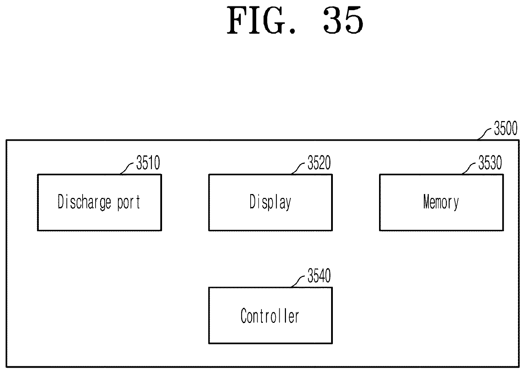

FIG. 35 is a block diagram showing the configuration of a hair dryer according to one of embodiments of the present disclosure.

As illustrated in FIG. 35, a hair dryer 3500 of the present disclosure includes a discharge port 3510, a display 3520, a memory 3530, and a controller 3540.

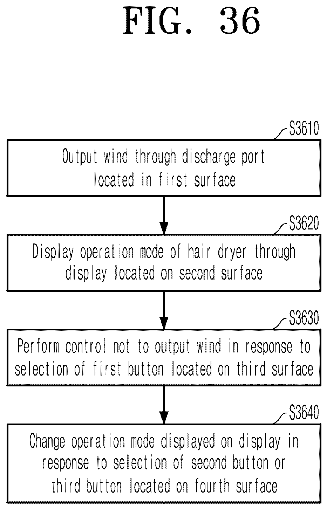

According to an embodiment, the discharge port 3510 is located on a first surface of the hair dryer and outputs wind. The embodiment described below may correspond to a flowchart illustrated in FIG. 36 below.

The display 3520 is located on a second surface of the hair dryer and displays an operation mode of the hair dryer.

The controller 3540 controls whether wind is output or not output through the discharge port 3510 in response to selection of a first button located on a third surface.

According to a feature of the present disclosure, the controller 3540 may change the operation mode displayed on the display 3520 in response to selection of a second button or a third button located on a fourth surface.

In particular, according to a feature of the present disclosure, the operation mode displayed on the display 3520 when the second button is selected and the operation mode displayed on the display 3520 when the third button is selected may be different from each other.

According to a feature of the present disclosure, as the number of selections of the second button located on the fourth surface increases, the display 3520 may display an operation mode in which the wind temperature increases.

According to a feature of the present disclosure, as the number of selections of the third button located on the fourth surface increases, the display 3520 may display an operation mode in which the wind intensity increases.

For example, according to a feature of the present disclosure, a direction in which the discharge port 3510 is directed and a direction in which the display 3520 is directed may be 180 degrees apart, thereby preventing the temperature of the hair dryer from rapidly increasing.

According to a feature of the present disclosure, the memory 3530 may store, for example, at least three or more operation modes. In the first operation mode, a wind temperature corresponds to level 1 and a wind intensity corresponds to level 6. According to a feature of the present disclosure, in the second operation mode, the wind temperature corresponds to level 5 and the wind intensity corresponds to level 5, and in the third operation mode, the wind temperature corresponds to level 7 and the wind intensity corresponds to level 4. Needless to say, it is also within the scope of the present disclose to slightly change the above figures.

In the first operation mode, cold air is output at 5-second intervals, and in the second operation mode, cold air is output at 3-second intervals.

According to a feature of the present disclosure, an angle between an external direction of the second surface and an external direction of the fourth surface may be greater than an angle between an external direction of the first surface and an external direction of the third surface. Therefore, there is an advantage in that the user may easily check the display while operating the hair dryer.

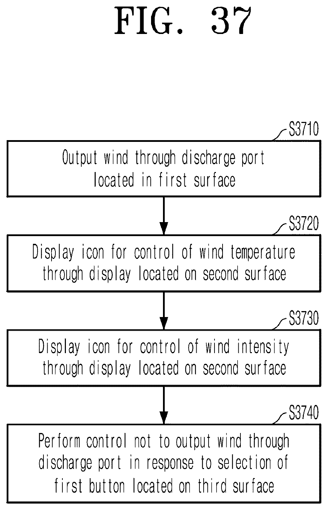

According to another embodiment, the discharge port 3510 is located on the first surface of the hair dryer and outputs wind. The other embodiment described below may correspond to a flowchart illustrated in FIG. 37 below.

The display 3520 is located on the second surface of the hair dryer and displays an icon for controlling the wind temperature in a first area and an icon for controlling the wind intensity in a second area.

The controller 3540 controls whether wind is output or not output through the discharge port 3510 in response to selection of a first button located on a third surface.

The first area and the second area are in a symmetrical relationship with each other and are each located in an edge region of the display. With reference to (b) of FIG. 3 above, those skilled in the art may repeat the process.

According to a feature of the present disclosure, a first temperature change of the wind according to a touch recognized in the first area and a second temperature change of the wind according to selection of the second button located on the fourth surface may be different. In particular, according to a feature of the present disclosure, the second temperature change may be greater than the first temperature change.

According to a feature of the present disclosure, a first intensity change of the wind according to a touch recognized in the first area and a second intensity change of the wind according to selection of the third button located on the fourth surface may be different. In particular, according to a feature of the present disclosure, the second intensity change may be greater than the first intensity change.

To implement this, the memory 3530 stores the first temperature change, the second temperature change, the first intensity change, and the second intensity change. With reference to (b) of FIG. 3 above, those skilled in the art may repeat the process.

FIG. 36 is a flowchart illustrating a method of controlling a hair dryer according to an embodiment of the present disclosure.

The hair dryer according to an embodiment of the present disclosure outputs wind through a discharge port located in a first surface (S3610).

The hair dryer displays the current operation mode of the hair dryer through a display located on the second surface (S3620).

The hair dryer controls wind not to be output through the discharge port in response to selection of the first button located on the third surface (S3630).

The hair dryer is designed to change the operation mode displayed on the display in response to selection of the second button or the third button located on the fourth surface (S3640).

FIG. 37 is a flowchart illustrating a method of controlling a hair dryer according to another embodiment of the present disclosure.

The hair dryer according to another embodiment of the present disclosure outputs wind through a discharge port located in a first surface (S3710).

Then, the hair dryer displays an icon for controlling the wind temperature through a display located on the second surface in the first area (S3720), and displays an icon for controlling the wind intensity through the display located on the second surface in the second area (S3730).

The hair dryer controls wind not to be output through the discharge port in response to selection of the first button located on the third surface (S3740).

The aforementioned present disclosure may also be embodied as computer readable code stored on a computer readable recording medium. The computer readable recording medium is any data storage device that can store data which can thereafter be read by a computer. Examples of the computer readable recording medium include a hard disk drive (HDD), a solid state drive (SSD), a silicon disk drive (SDD), read-only memory (ROM), random-access memory (RAM), CD-ROM, magnetic tapes, floppy disks, optical data storage devices, carrier waves (e.g., transmission via the Internet), etc.

Although the data processing device and method according to the embodiments of the present disclosure described above have been described as specific embodiments, these are merely examples, and the present disclosure is not limited thereto, and should be interpreted as having the broadest scope according to the basic idea disclosed in this specification. Those skilled in the art may combine or substitute the disclosed embodiments to implement embodiments not disclosed herein, but this does not depart from the scope of the present disclosure. Those skilled in the art may easily change or modify the disclosed embodiments based on this specification, and it is obvious that such changes or modifications also fall within the scope of the present disclosure.

### Mode for Implementing the Disclosure

Various embodiments for implementing the present disclosure have been described in detail in the previous table of contents.

### Industrial Applicability

The present disclosure is applicable to technology directly or indirectly related to hair dryers, and thus its industrial applicability is recognized.

## Claims

1. A method of controlling a hair dryer, the method comprising:
outputting wind through a discharge port located in a first surface of the hair dryer;
displaying an icon for controlling a temperature of the wind in a first area through a display located on a second surface of the hair dryer;
displaying an icon for controlling an intensity of the wind in a second area through the display located on the second surface of the hair dryer; and
performing control not to output wind through the discharge port in response to an input received through a first button located on a third surface.

2. The method of claim 1, wherein the first area and the second area are symmetrical to each other and are each located in an edge region of the display.

3. The method of claim 1, wherein a first temperature change of the wind according to a touch recognized in the first area and a second temperature change of the wind according to an input received through a second button located on a fourth surface are different from each other.

4. The method of claim 3, wherein the second temperature change is greater than the first temperature change.

5. The method of claim 4, wherein a first intensity change of the wind according to a touch recognized in the first area and a second intensity change of the wind according to an input received through a third button located on the fourth surface are different from each other.

6. The method of claim 5, wherein the second intensity change is greater than the first second intensity change.

7. The method of claim 6, further comprising storing the first temperature change, the second temperature change, the first intensity change, and the second intensity change in a memory.

8. A hair dryer comprising:
a discharge port located in a first surface of the hair dryer and outputting wind;
a display located on a second surface of the hair dryer and configured to display an icon for controlling a temperature of the wind in a first area and display an icon for controlling an intensity of the wind in a second area; and
a controller configured to perform control not to output wind through the discharge port in response to an input received through a first button located on a third surface.

9. The hair dryer of claim 8, wherein the first area and the second area are symmetrical to each other and are each located in an edge region of the display.

10. The hair dryer of claim 8, wherein a first temperature change of the wind according to a touch recognized in the first area and a second temperature change of the wind according to an input received through a second button located on a fourth surface are different from each other.

11. The hair dryer of claim 10, wherein the second temperature change is greater than the first temperature change.

12. The hair dryer of claim 11, wherein a first intensity change of the wind according to a touch recognized in the first area and a second intensity change of the wind according to an input received through a third button located on the fourth surface are different from each other.

13. The hair dryer of claim 12, wherein the second intensity change is greater than the first second intensity change.

14. The hair dryer of claim 13, further comprising a memory storing the first temperature change, the second temperature change, the first intensity change, and the second intensity change.

15. The method of claim 1, wherein an angle between an external direction of the second surface and an external direction of the fourth surface is greater than an angle between an external direction of the first surface and an external direction of the third surface.

16. The hair dryer of claim 8, wherein an angle between an external direction of the second surface and an external direction of the fourth surface is greater than an angle between an external direction of the first surface and an external direction of the third surface.
